# EUROPEAN PATENT APPLICATION

(11) **EP 1 667 475 A1**
(43) Date of publication of application: **07.06.2006**
(21) Application number: 04788070.3
(22) Date of filing: 24.09.2004
(51) Int. Cl.: H04Q 7/22, H04Q 7/32, G06F 13/00

(54) **POSITION INFORMATION SERVICE PROVIDING SYSTEM AND METHOD THEREOF**

(30) Priority: 25.09.2003 JP 2003334081
(71) Applicant: NEC CORPORATION, Minato-ku, Tokyo 108-0014 (JP)
(72) Inventor: MATSUDA, Jun-ichi, Tokyo 108-0014 (JP)
(74) Representative: Samson & Partner
(86) International application number: PCT/JP2004/013911
(87) International publication number: WO 2005/032175

(57) **Abstract**

If a user 101 clicks a link to a specific URL (step 501), a terminal 102 transmits a content request to a content server 201 (step 502), and in parallel, starts a location measurement processing (step 203). Upon completion of the location measurement processing (step 204), the location measurement result thereof is maintained in a memory of the terminal 102 (step 503). If a link with a location measurement result request is clicked by the user 101 (step 202), the terminal 102 gets a position of the terminal itself, and transmits a content request with location based information to the content server 201. Waiting time which the user feels when a location based information service is provided is thus reduced.

## Description

### Technical Field

The present invention relates to a location based information service providing-system and a method thereof and particularly, to control of a method used when determining a geographical position of a mobile station on a mobile communication network.

### Background Art

In recent years, a number of services using location based information of cellular phone terminals have been proposed and put to practical operation. A method of providing location based information services in a conventional mobile communication network will be described with reference to the drawings.

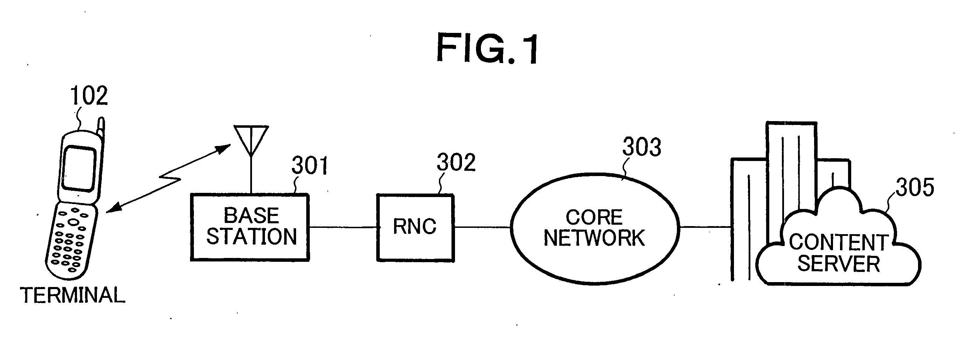

FIG. 1 is a diagram showing schematic structure of a mobile communication network.

As shown in FIG. 1, a base station 301 is connected to an RNC (Radio Network Controller) 302. The RNC 302 and a content server 305 are connected to a core network 303. The content server 305 provides various contents. A terminal 102 communicates with the content server 305 through the base station 301, RNC 302, and core network 303, to receive services.

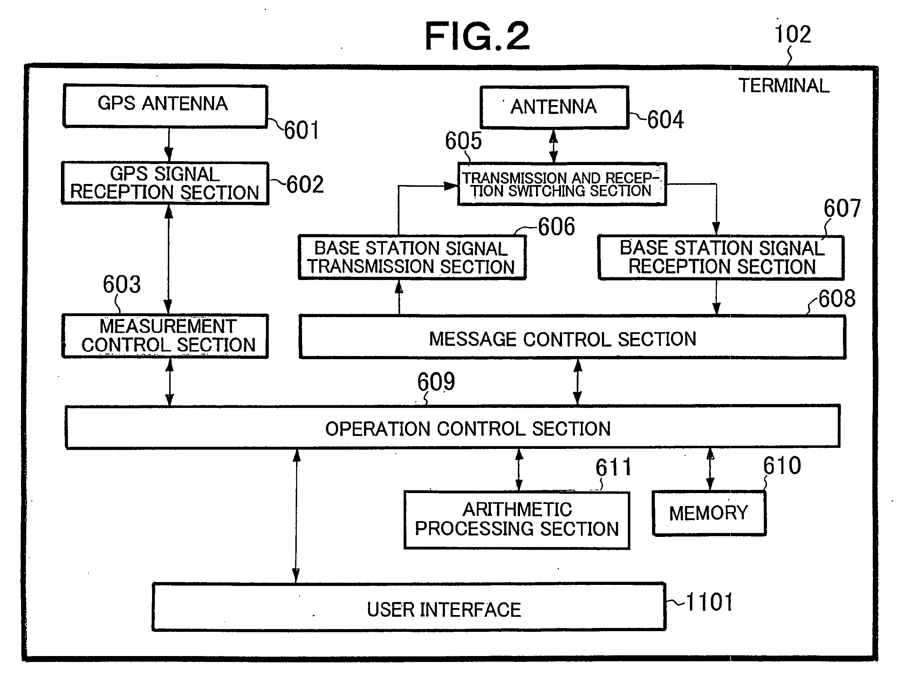

FIG. 2 is a diagram showing schematic structure of the terminal 102.

Respective components will now be described below.

A GPS antenna 601 is used to receive signals from GPS satellites. A GPS signal reception section 602 establishes synchronization with a signal transmitted from a GPS satellite, and picks up time information contained in the signal received. A measurement control section 603 specifies a GPS satellite which measures the position of the terminal 102, and notifies the GPS signal reception section 602 of information necessary for positioning.

The antenna 604 is used for transmission and reception of signals. A transmission and reception switching section 605 switches transmission and reception from each other. A message control section 608 transmits a message through the antenna 604 and a base station signal transmission section 606, and receives a message through the antenna 604 and a base station signal reception section 607. The message that the terminal 102 transmits includes information concerning a location measurement result and the like. The message that the terminal 102 receives includes auxiliary information (assistance data) necessary for measurement or the like.

An operation control section 609 controls the measurement control section 603 and the message control section 608. The operation control section 609 also measures signals transmitted from GPS satellites and exchanges messages with the RNC 302. Further, the operation control section 609 stores auxiliary information (assistance data) included in a received message, into a memory 610, and informs an arithmetic processing section 611 of the auxiliary information and a measurement result of a GPS signal informed from the measurement control section 603, to request an arithmetic processing of the position of a terminal 102. The memory 610 stores the auxiliary information received from the RNC 302. The arithmetic processing section 611 calculates the position of the terminal 102 from the auxiliary information informed from the operation control section 609 and a measurement result of the GPS signal.

A user interface 1101 is used when a user makes any operation on the terminal 102 or displays content. The user interface 1101 also instructs the operation control section 609 about processings or displays information transmitted from the operation control section 609. As example of a content, there are structured documents that are represented by WML (Wireless markup language) or HTML (Hypertext markup language).

Described next will be a flow of a content between a terminal 102 and a content server 103 in case of using a service that does not require location based information of the terminal, according to conventional technology.

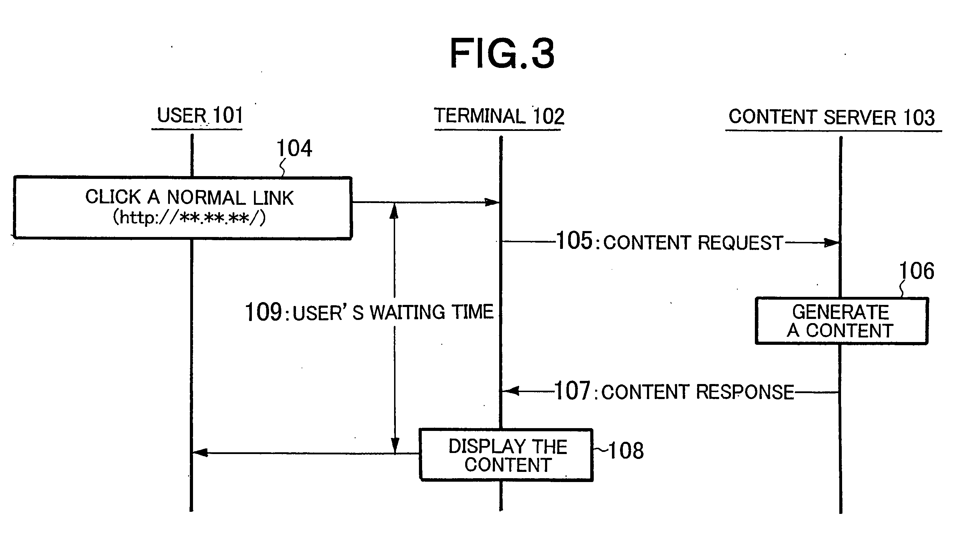

FIG. 3 is a chart showing the flow of a content between the terminal 102 and the content server 103 in case of the service that does not use location based information of the terminal, according to the conventional technology. Suppose in FIG. 3 that a connection has been established between the terminal 102 and the content server 103.

A user 101 clicks a normal link (step 104). Then, the terminal 102 refers to a URL embedded in the clicked link, and transmits a content request 105 to the content server 103. The link is used to call a specific content from a content, and information associated with the URL of the content to be called is embedded in the link.

The content server 103 that has received the content request 105 generates a content (step 106), and transmits the generated content to the terminal 102 (step 107). The terminal 102 that has received a content response 107 displays a received content on a screen thereof (step 108).

In this flow of the content, user's waiting time 109 which the user 101 feels is a period that elapses from step 104 to step 108.

Described next will be a flow of a content between the terminal 102 and a content server 201 in case of using a service that uses location based information of the terminal.

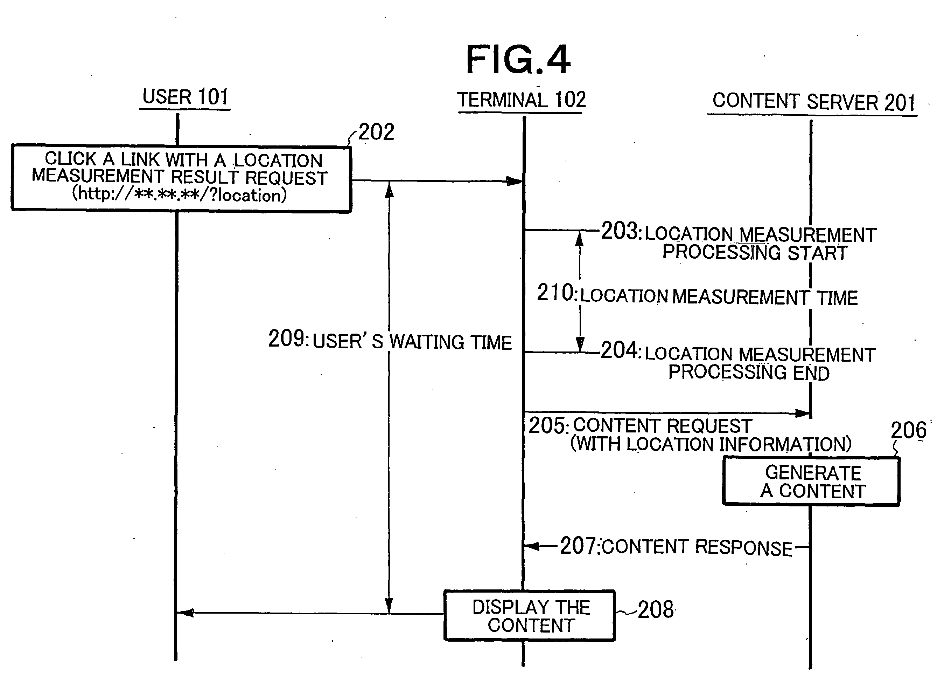

FIG. 4 is a chart showing the flow of a content between the terminal 102 and the content server 201 in case of using a service that uses location based information of the terminal. Suppose in FIG. 4 that a connection has been established between the terminal 102 and the content server 201.

The user 101 clicks a link with a location measurement result request (step 202). The terminal 102 recognizes "?location" embedded in the clicked link, and starts a location measurement processing (step 203). Upon completion of the location measurement processing (step 204), the terminal 102 transmits a content request to the content server 201 (step 205). However, Each of the content requests individually transmitted includes a location measurement result.

The content server 201 that has received the content request from the terminal 102 generates a content, referring to the location based information of the terminal 102 included in the content request (step 206). The content server 201 transmits the generated content to the terminal 102 (step 207).

The terminal 102 that has received a content response 207 displays the received content on a screen (step 208).

In this flow of the content, user's waiting time 209 which the user 101 feels is a period that elapses from step 202 to step 208. A difference from the former flow in the case of the service not using location based information of the terminal depends on whether a location measurement processing is carried out or not. Therefore, the user's waiting time 209 is longer by location measurement time 210 required for the location measurement processing, compared with the user's waiting time 109.

An example of a location measurement method which a terminal uses to specify the position of itself will be a network-assisted GPS (Network Assisted GPS location measurement; hereinafter referred to as A-GPS location measurement) which uses signals from GPS satellites. This method is a location measurement method standardized by 3rd General Partnership Project (hereinafter referred to as 3GPP), which is one of organizations promoting standardization and defines standards of W-CDMA (Wideband Code Division Multiple Access) method.

Described next will be conventional technology using the A-GPS location measurement defined by the 3GPP.

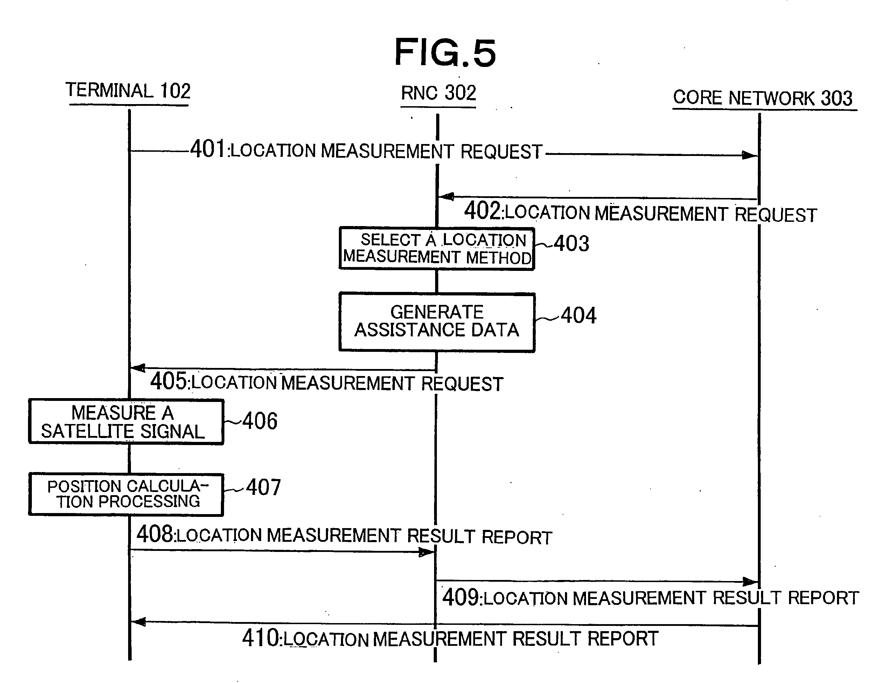

FIG. 5 is a chart showing a sequence in case of using the A-GPS location measurement defined by the 3GPP. Suppose that a terminal 102 has already used a Web application program and the like and a connection has been established between the terminal 102 and the core network 303. FIG. 5 shows a sequence in case where the terminal 102 performs an arithmetic processing of a position.

The terminal 102 transmits a location measurement request to the core network 303 (step 401). The core network 303 transmits the location measurement request to the RNC 302 (step 402). This location measurement request 401 includes information concerning necessary location measurement accuracy.

The RNC 302 which has received the location measurement request from the core network 303 selects a location measurement method with reference to the information concerning necessary location measurement accuracy (step 403). Suppose in this case that the A-GPS location measurement is selected. Upon selection of the A-GPS location measurement, the RNC 302 generates auxiliary information (assistance data) necessary for the terminal 102 to perform measurement (step 404). Upon completion of the auxiliary information, the RNC 302 transmits a location measurement request to the terminal 102 (step 405). At this time, the auxiliary information generated in step 404 is transmitted together with the location measurement request.

The terminal 102 which has received the location measurement request measures a signal from a GPS satellite, referring to the auxiliary information received together with the location measurement request (step 406). Upon completion of the measurement, the terminal 102 performs an arithmetic processing to calculate its own position using the assistance data and the measurement result (step 407). Upon completion of the arithmetic processing, the terminal 102 reports the arithmetic result to the RNC 302 (step 408).

The RNC 302 which has received the arithmetic result from the terminal 102 reports the arithmetic result to the core network 303 (step 409). The core network 303 to which a location measurement result has been reported by the RNC 302 further reports the location measurement result to the terminal 102 (step 410).

As has been described above, time required from step 401 to step 410 is equivalent to the location measurement time 210 shown in FIG. 4.

Another example of the location measurement method used by the terminal 102 to specify its own position will be a base station location measurement using signals from base stations. The 3GPP has standardized base station location measurement called Observed Time Difference of Arrival location measurement (hereinafter referred to as OTDOA location measurement).

According to the OTDOA location measurement, two hyperbolic curves are obtained from differences among arrival times of signals from three base stations. Then, an intersection between the hyperbolic curves is taken as the position of a terminal. The OTDOA location measurement has nearly the same location measurement sequence as the A-GPS location measurement. A difference between both is the point that the information included in the auxiliary information generated in step 404 differs. Another difference is that signals from GPS satellites are not measured but arrival time differences between signals from base stations are measured in step 406. Yet another difference is that the arithmetic processing executed in step 407 differs from that executed in the A-GPS location measurement. Compared with the A-GPS location measurement, the OTDOA location measurement is faster, e.g., measurement time in step 406 is one second or less. However, the A-GPS location measurement achieves higher accuracy.

The A-GPS location measurement described above is capable of specifying positions with very high accuracy. However, the measurement in step 406 requires as long time as 10 seconds or so in some cases and raises a disadvantage that the user's waiting time 209 is long.

### Disclosure of the Invention

The present invention has been made in view of the above disadvantage and has an object of providing a location based information service system capable of reducing waiting time which users feel when a location based information service is provided.

According to a first aspect of the present invention to achieve the above object, a location based information service providing-method for use in a mobile communication network system includes a content server which transmits a content, and a terminal which has a location measurement means to execute a location measurement processing, a reception means to receive a content from the content server, and a transmission means to transmit a content request which requests a content from the content server, the method comprising:
a first step in which the location measurement means executes a location measurement processing of determining a position of the terminal; and
a second step in which if a content request with a location measurement result is given, the transmission means transmits to the content server a content request with information concerning a geographical position of the terminal which is determined as a result of the location measurement processing in the first step.

According to a second aspect of the present invention to achieve the above object, a location based information service providing-method for use in a mobile communication network system includes a content server which transmits a content, and a terminal which includes a location measurement means to execute a first location measurement processing and a second location measurement processing having faster processing speed than the first location measurement processing, a recognition section to recognize function information issued for every operation, a reception means to receive a content from the content server, and a transmission means to transmit a content request requesting a content from the content server, the method comprising:
a first step in which when first function information is recognized by the recognition section, the location measurement means executes the second location measurement processing to determine a position of the terminal;
a second step in which the transmission means transmits to the content server a content request with information concerning the geographical position of the terminal determined as a result of the second location measurement processing in the first step;
a third step in which the location measurement means executes the first location measurement processing to determine the position of the terminal after the second step; and
a fourth step in which the transmission means transmits to the content server a content request with information concerning the geographical position of the terminal determined as a result of the first location measurement processing in the third step.

According to a third aspect of the present invention to achieve also the above object, a terminal for use in a mobile communication network system includes the terminal and a content server which transmits a content in response to a content request from the terminal, the terminal comprising:
a recognition section to recognize function information issued for every operation;
a location measurement means to execute a location measurement processing of determining a position of the terminal if the function information is recognized by the recognition section;
a means to transmit a location measurement result of the location measurement processing and a content request, if a content request with a location measurement result is issued; and
a means to receive a content transmitted in response to the content request transmitted.

According to a fourth aspect of the present invention to achieve also the above object, a terminal for use in a mobile communication network system includes the terminal and a content server which transmits a content in response to a content request from the terminal, the terminal comprising:
a location measurement means to execute a first location measurement processing and a second location measurement processing having faster processing speed than the first location measurement processing,
a recognition section to recognize function information issued for every operation;
a reception means to receive a content from the content server;
a transmission means to transmit to the content server a content request requesting a content;
a control means to carry out a processing of making the location measurement means execute a second location measurement processing of determining a position of the terminal when first function information is recognized by the recognition section, a processing of making the transmission means transmit to the content server a content request with information concerning a geographical position of the terminal determined as a result of the second location measurement processing, a processing of making the location measurement means execute the first location measurement processing of determining the position of the terminal, and a processing of making the transmission means transmit to the content server a content request with information concerning the geographical position of the terminal determined as a result of the first location measurement processing.

According to a fifth aspect of the present invention to achieve also the above object, a program recorded in a recording section of a terminal in a location based information service providing system using a mobile communication network makes the terminal execute:
a first processing in which a location measurement processing of determining a position of the terminal is executed when function information issued for every operation is recognized; and
a second processing in which, if a content request with a location measurement result is given, a content request with information concerning a geographical position of the terminal determined as a result of the location measurement processing is transmitted to a content server connected to the terminal via the mobile communication network.

According to a sixth aspect of the present invention to achieve the above object, a program recorded in a recording section of a terminal in a location based information service providing system using a mobile communication network makes the terminal execute:
a first processing in which when function information issued for every operation is recognized, a second location measurement processing of determining a position of the terminal is executed;
a second processing in which a content request with information concerning a geographical position of the terminal determined as a result of the second location measurement processing is transmitted to a content server connected to the terminal via the mobile communication network;
a third processing in which a first location measurement processing having slower processing speed than the second location measurement processing is executed; and
a fourth processing in which a content request with information concerning the geographical position of the terminal determined as a result of the first location measurement processing is transmitted to the content server.

The present invention is applicable to whole services utilizing positions of terminals which are provided, for example, by i-mode (an information service of texts and the like via cellular phones: a registered trademark in Japan), WAP (Wireless Application Protocol), or the like. According to the present invention, waiting time which users feel when a location based information service is provided can be reduced or users can be saved from feeling such waiting time.

### Brief Description Of the Drawing

FIG. 1 is a diagram schematically showing a mobile communication network;
FIG. 2 is a diagram showing schematic configuration of a terminal 102 according to the conventional technology;
FIG. 3 is a chart showing a sequence in case where a user uses a service which does not use location based information;
FIG. 4 is a chart showing a sequence in case where a user uses a service which uses location based information;
FIG. 5 is a chart showing a location measurement sequence of A-GPS location measurement;
FIG. 6 is a diagram showing schematic configuration of the terminal 102 in the first, second, fifth, and seventh embodiments according to the present invention;
FIG. 7 is a chart showing a sequence in the first embodiment according to the present invention;
FIG. 8 is a chart showing a sequence in the second embodiment according to the present invention;
FIG. 9 is a diagram showing schematic configuration of the terminal 102 in the third, fourth, sixth, and eighth embodiments according to the present invention;
FIG. 10 is a chart showing a sequence in the third embodiment according to the present invention;
FIG. 11 is a chart showing a sequence in the fourth embodiment according to the present invention;
FIG. 12 is a chart showing a sequence in the fifth embodiment according to the present invention;
FIG. 13 is a chart showing a sequence in the sixth embodiment according to the present invention;
FIG. 14 is a chart showing a sequence in the seventh embodiment according to the present invention;
FIG. 15 is a chart showing a sequence in the eighth embodiment according to the present invention;
FIG. 16 is a diagram showing schematic configuration of the terminal 102 in the ninth and tenth embodiments according to the present invention;
FIG. 17 is a chart showing a sequence in the ninth and tenth embodiments according to the present invention;
FIG. 18 is a diagram showing schematic configuration of the terminal 102 in the eleventh, twelfth, fifteenth, and sixteenth embodiments according to the present invention;
FIG. 19 is a chart showing a sequence in the eleventh embodiment according to the present invention;
FIG. 20 is a chart showing a sequence in the twelfth embodiment according to the present invention;
FIG. 21 is a diagram showing schematic configuration of the terminal 102 in the thirteenth and seventeenth embodiments according to the present invention;
FIG. 22 is a chart showing a sequence in the thirteenth embodiment according to the present invention;
FIG. 23 is a chart showing a sequence in the fifteenth embodiment according to the present invention;
FIG. 24 is a chart showing a sequence in the sixteenth embodiment according to the present invention;
FIG. 25 is a chart showing a sequence in the seventeenth embodiment according to the present invention; and
FIG. 26 is a diagram showing schematic configuration of the terminal 102 in case of realizing functions of the terminal 102 by execution a program in the present invention.

### Best Mode For Carrying Out the Invention

In a location based information service providing system according to the present invention, a location measurement processing is executed in advance before the user clicks a link which requires location based information, and the location measurement result is maintained (held). If the user clicks the link which requires location based information, the object of the invention described can be achieved by utilizing the maintained (held) location measurement result.

### [Embodiment 1]

A first embodiment of the present invention will now be described. Structure of a system according to the present embodiment is the same as that shown in FIG. 1 which has already been described.

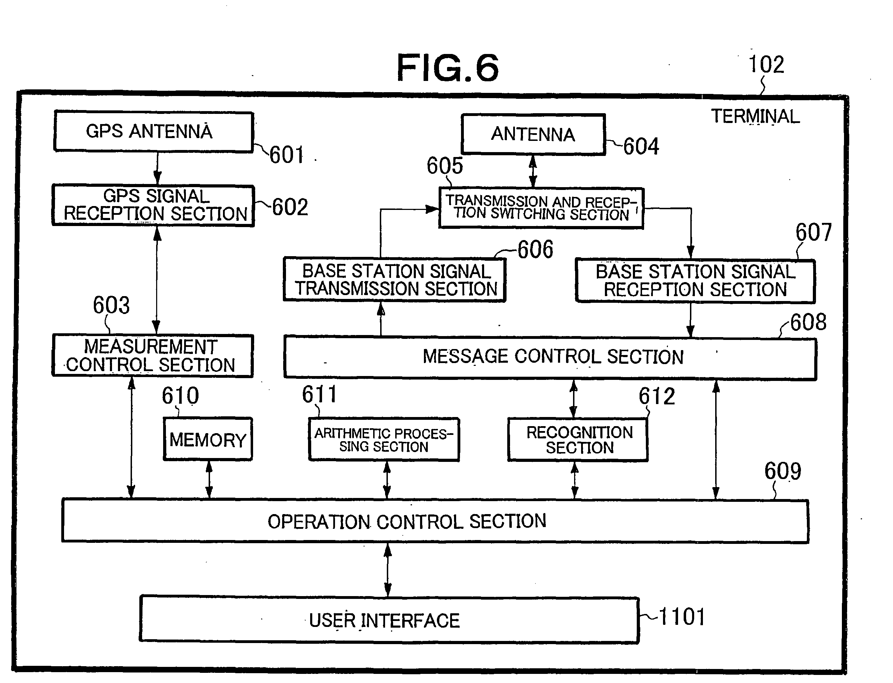

FIG. 6 is a block diagram of a terminal 102. The same components of the structure as those shown in FIG. 2 are denoted by the same numerals, and detailed descriptions thereof will be omitted.

The structure of the terminal 102 shown in FIG. 6 differs from the structure shown in FIG. 2 in that the structure of FIG. 6 includes a recognition section 612. The recognition section 612 recognizes that the user 101 has clicked a link to a specific URL.

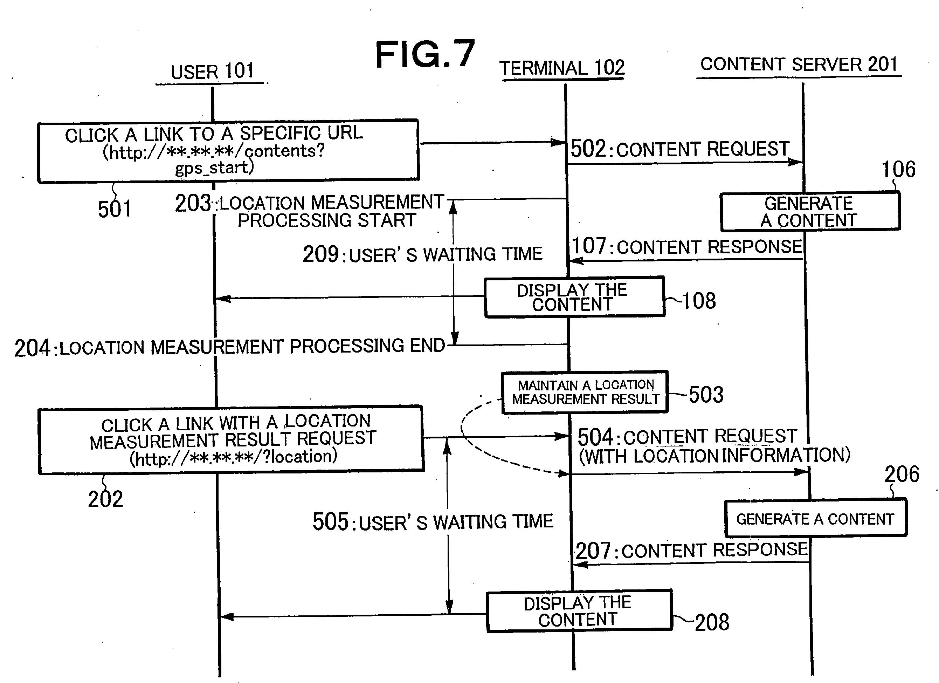

FIG. 7 is a chart showing a sequence between the terminal 102 and a content server 201 in the first embodiment of the present invention.

The user 101 clicks a link to a specific URL (step 501). A portal site that compiles services can be considered as the specific URL. Specifically, the link to the specific URL is described as "http://**.**.**/contents?gps_start" or the like. The "?gps_start" described in the link to the specific URL is a command to make the terminal 102 start a location measurement processing. Therefore, the terminal 102 transmits a content request to the URL specified by the http://**.**.**/contents (step 502). At the same time, the recognition section 612 recognizes that the user 101 has clicked the link to the specific URL, and the location measurement control section 603 starts a location measurement processing (step 203). Although the link to the specific URL is described as "http://**.**.**/contents?gps_start" in the present embodiment, the part "content?gps_start" is nothing more than an example, and so, there can be other various ways of describing than this way of describing.

The content server 201 that has received the content request transmitted in step 502 generates a content (step 106), and transmits the generated content to the terminal 102 (step 107).

The terminal 102 receives and displays the transmitted content (step 108). Note that this content does not require location based information. The content is displayed on a display section, for example, a liquid crystal display, an EL display, or the like.

Upon completion of a location measurement processing started in step 203 (step 204), the terminal 102 stores the location measurement result thereof into a memory 610 (step 503) .

Next, the user 101 clicks a link with a location measurement result request (step 202). Specifically, the link with a location measurement result request is described as "http://**.**.**/?location" or the like. At this time, the recognition section 612 recognizes that the user 101 has clicked the link with a location measurement result request. The recognition section 612 then gets a location measurement result stored in the memory 610 by referring to it, and transmits a content request with the got location measurement result, to the content server (step 504). The content server 201 that has received the content request transmitted in step 504 generates a content (step 206), and transmits the generated content to the terminal 102 (step 207). The transmitted content is received by the terminal 102, and the terminal 102 displays the received content (step 208).

Although A-GPS location measurement or OTDOA location measurement is used as the location measurement method, any other method may be adopted in the present embodiment.

As has been described above, the present embodiment is configured as follows. That is, the position of a terminal 102 is measured in advance, and the location measurement result thereof is maintained (held). When the user uses a location based information service, the location measurement result maintained (held) by the terminal 102 is used. Therefore, waiting time that the user feels can be reduced.

### [Embodiment 2]

Next, a second embodiment of the present invention will be described.

In the first embodiment, the location measurement processing is started when a link to a specific URL is clicked by the user 101. The second embodiment will be described with reference to configuration in which the location measurement processing is started when a specific keyword included in a content received from the content server 201 is detected. Also in this embodiment, FIG. 6 is referred to as a block diagram depicting the terminal 102 like in the first embodiment.

In the present embodiment, the recognition section 612 recognizes that the content from the content server 201 includes a location measurement request "?gps_start".

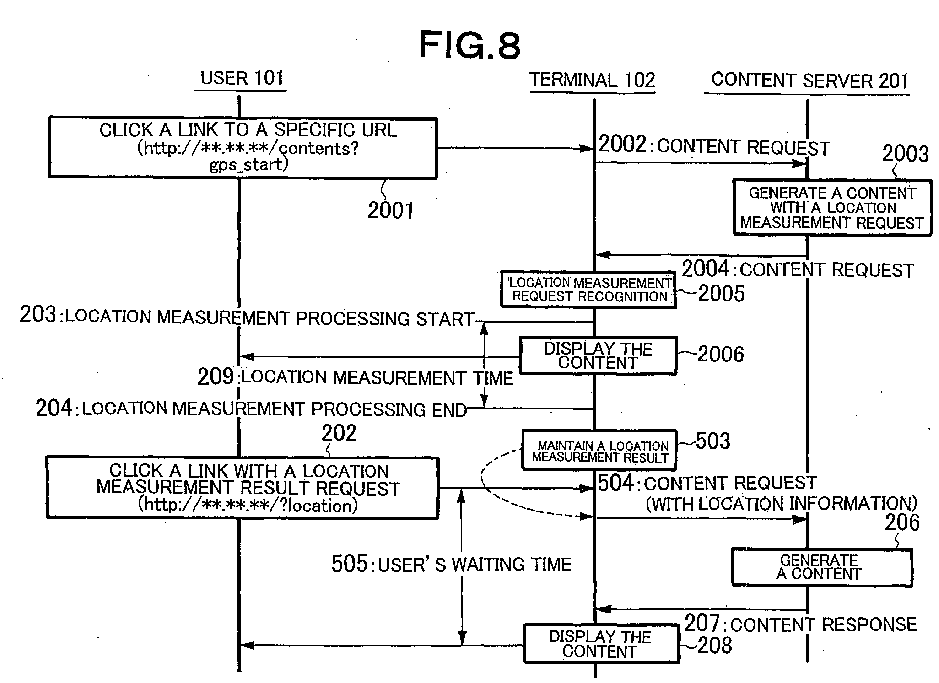

FIG. 8 is a chart showing a flow of a content between the terminal 102 and the content server 201 in the present embodiment.

When the link to the specific URL is clicked by the user 101 (step 2001), the terminal 102 requests a content from the content server 201 (step 2002). The link to the specific URL is described as "http://**.**.**/contents?gps_start" like in the first embodiment.

The content server 201 which has received the content request from the terminal 102 recognizes the content request as being directed to a specific URL, and generates a content with a location measurement request "?gps_start" (step 2003). Further, the content server 201 transmits the created content to the terminal 102 (step 2004).

A base station signal reception section 607 receives the content from the content server 201. Then, the recognition section 612 refers to the received content and recognizes that the location measurement request "?gps_start" is included (step 2005). The recognition section 612 thus recognizes the location measurement request, and then, the measurement control section 603 starts a location measurement processing (step 203). At the same time when the location measurement processing is started, the terminal 102 displays the received content (step 2006).

Subsequent processing steps (steps 204, 503, 202, and 504, and steps 206 to 208) are the same as those in the first embodiment, and therefore, detailed descriptions thereof will be omitted.

Although A-GPS location measurement or OTDOA location measurement is used as the location measurement method, any other method may be adopted in the present embodiment. Like in the first embodiment, waiting time that users feel can be reduced according to the present embodiment.

### [Embodiment 3]

Next, a third embodiment of the present embodiment will be described.

The first embodiment has configuration described as follows. That is, the location measurement processing is executed by the terminal 102 when a link to a specific URL is clicked, and the location measurement result thereof is maintained. When another link with a location measurement result request is clicked, the maintained location measurement result is used. However, time elapses from a time point when the link to the specific URL is clicked to another time point when the other link with a location measurement result request is clicked. If the terminal moves in this time period, the maintained location measurement result becomes inaccurate. Hence, in the present embodiment, configuration in which the location measurement result is updated at constant time intervals will be described.

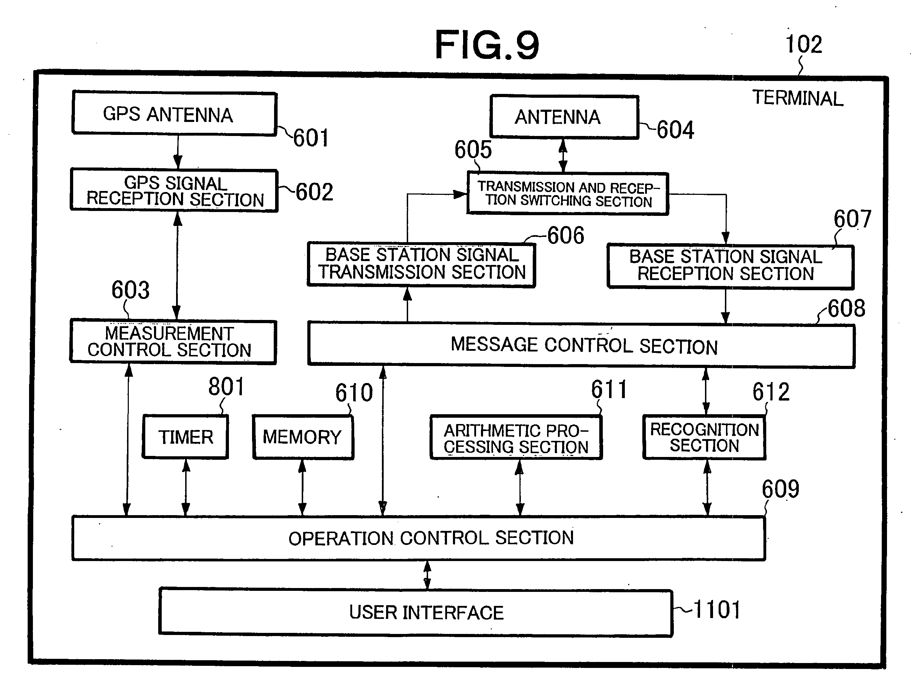

FIG. 9 is a block diagram of a terminal 102 in the present embodiment. The same components of the configuration as shown in FIG. 6 referred to in the descriptions of the foregoing embodiments will be denoted by the same numerals, and detailed descriptions thereof will be omitted.

The terminal 102 shown in FIG. 9 differs from the configuration shown in FIG. 6 in that the terminal of FIG. 9 has a timer 801. The timer 801 counts time which elapses from completion of the location measurement processing. The timer 801 can be controlled from the operation control section 609.

Described next will be a flow of a content between the terminal 102 and the content server 201 in the present embodiment.

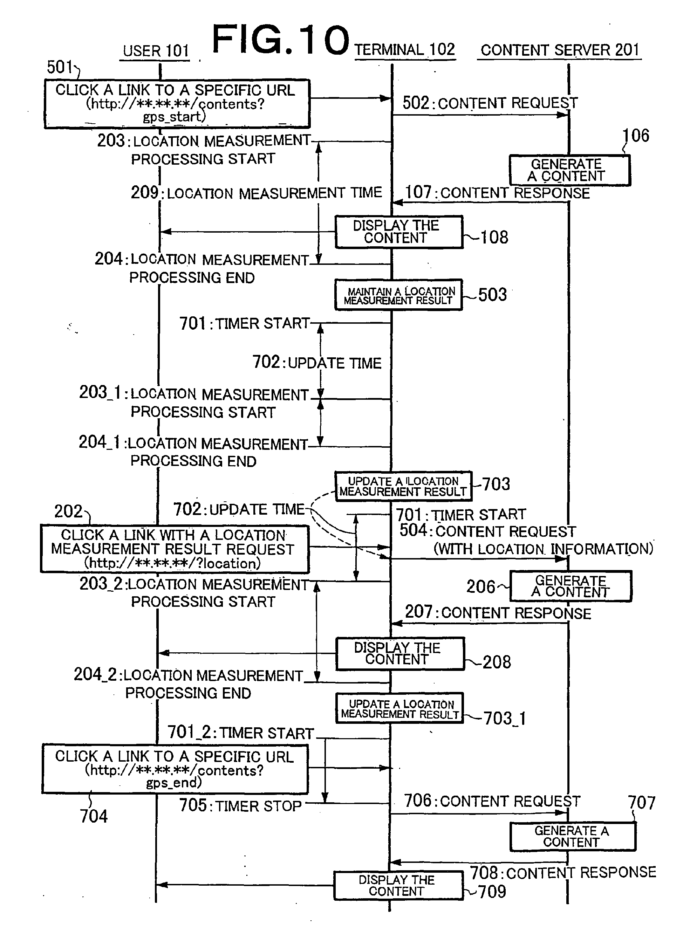

FIG. 10 is a chart showing a flow of a content between the terminal 102 and the content server 201 in the present embodiment.

When a link to a specific URL is clicked by the user 101, the terminal 102 transmits a content request to the content server 201 (step 502). The link to the specific URL is described as "http://**.**.**/contents?gps_start" like in the first embodiment. The terminal 102 thus transmits the content request. Then, the recognition section 612 recognizes that the user 101 has clicked the link to the specific URL, and the location measurement control section 603 starts a location measurement processing (step 203).

The content server 201 which has received the content request from the terminal 102 generates a content (step 106) and transmits the generated content to the terminal 102 (step 107).

The terminal 102 which has received a content response from the content server 201 displays the content (step 108).

Upon completion of the location measurement processing started in step 203 (step 204), the terminal 102 maintains the location measurement result thereof in the memory 610 (step 503). Processings up to this step are the same as those in the first embodiment, and detailed descriptions thereof will be omitted.

After the terminal 102 stores the location measurement result into the memory 610, the operation control section 609 starts the timer 801 (step 701). Thereafter, the terminal 102 starts again the location measurement processing when update time 702 elapses (step 203_1). Upon completion of the latter location measurement (step 204-1), the location measurement result stored in the memory 610 is updated (step 703). Upon completion of the update of the location measurement result by the terminal 102, the operation control section 609 resets the timer 801, and starts again the timer 801 (701_1).

Next, the user 101 clicks the link with a location measurement result request (step 202). Then, the terminal 102 refers to the memory 610 and gets information concerning its own position. The terminal 102 further transmits a content request to the content server 201 (step 504). The link with a location measurement result request is described as "http://**.**.**/?location" like in the first embodiment.

The content server 201 which has received the content request generates a content (step 206), and transmits the generated content to the terminal 102 (step 207).

The terminal 102 which has received a content response from the content server 201 displays the received content (step 208). Processings up to this step from step 202 are the same as those in the first embodiment, and detailed descriptions thereof will be omitted.

When the update time 702 elapses from the time point when the timer 801 was started in step 701_1, the location measurement processing is started again (step 203_2). Upon completion of the location measurement processing (step 204_2), the location measurement result is updated (step 703_1), and the timer 801 is started (step 701_2).

Described below will be a processing when a specific URL ("http://**.**.**/contents?gps_end") is clicked by the user 101 in step 704.

The "?gps_end" included in the specific URL is a command to stop the location measurement processing of the terminal 102 from being periodically carried out. Therefore, the terminal 102 on which the specific URL is clicked transmits a content request to the content server 201 specified by the "http://**.**.**/contents" (step 706). At the same time, the recognition section 612 recognizes that the specific URL has been clicked, and the operation control section 609 stops the timer 801 (step 705).

The content server 201 which has received the content request from the terminal 102 generates a content (step 707), and transmits the generated content to the terminal 102 (step 708). The terminal 102 displays the received content (step 709).

The present embodiment is configured to stop the timer 801 when the specific URL is clicked. However, the timer 801 may be stopped when the connection established with the content server 201 is disconnected. Alternatively, there may be another method in which the timer 801 is stopped after the location measurement processing is executed a predetermined number of times or when predefined time elapses. Although A-GPS location measurement or OTDOA location measurement is used as the location measurement method, any other method may be adopted in the present embodiment. According to the present embodiment, waiting time which users feel can be reduced like in the first embodiment. Besides, an updated location measurement result can be obtained even if the terminal moves.

### [Embodiment 4]

Next, a fourth embodiment of the present invention will be described.

The foregoing third embodiment has been described with reference to configuration as follows. That is, a location measurement processing is started when a specific URL is clicked. Thereafter, the location measurement processing is executed periodically. This periodically executed location measurement processing is stopped when the specific URL is clicked. The present embodiment will be described with reference to configuration in which the location measurement processing is started or stopped when a specific keyword included in a content received from the content server 201 is detected. FIG. 9 is also referred to as a block diagram depicting the terminal 102, like in the third embodiment.

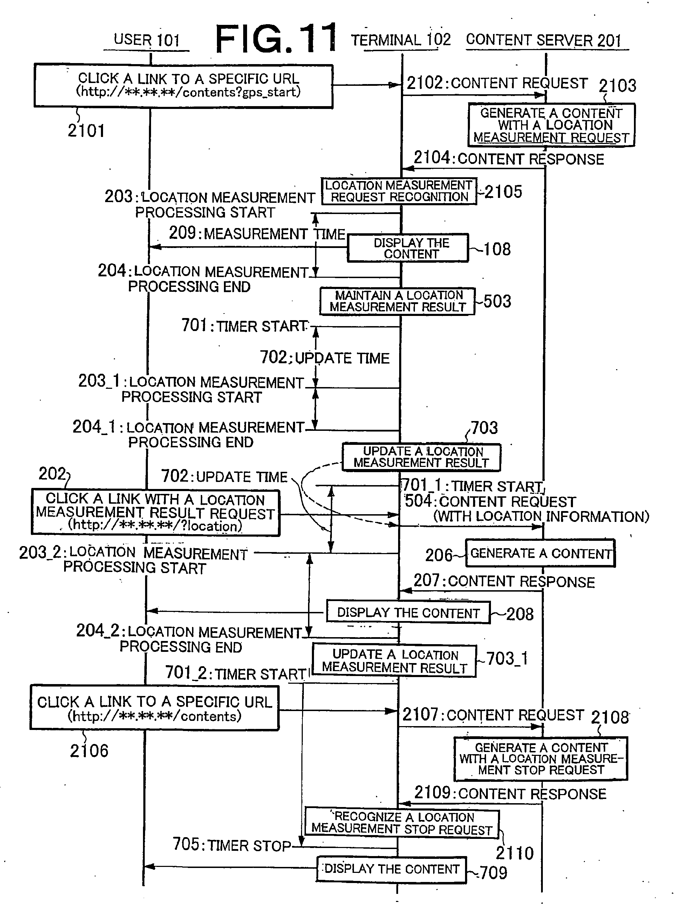

FIG. 11 is a sequence chart according to the present embodiment.

A link to a specific URL is clicked by the user 101 (step 2101). As the link to the specific URL is clicked, the terminal 102 requests a content from the content server 201 (step 2102). The link to the specific URL is described as "http://**.**.**/contents?gps_start" like in the first embodiment.

The content server 201 which has received a content request from the terminal 102 recognizes the content request as being directed to the specific URL. The content server 201 then generates a content including a location measurement request "?gps_start" (step 2103), and transmits the created content to the terminal 102 (step 2104).

The base station signal reception section 607 receives the content from the content server 201. Then, the recognition section 612 refers to the received content and recognizes that the location measurement request "?gps_start" is included (step 2105). When the recognition section 612 recognizes the location measurement request, the location measurement control section 603 then starts a location measurement processing (step 203).

Processings in steps 203 to 701_2 are the same as those in the third embodiment described above, and therefore, descriptions thereof will be omitted herefrom.

When the link to the specific URL is clicked by the user 101 (step 2106), the terminal 102 requests a content from the content server 201 (step 2107). The link to the specific URL is described as (http://**.**.**/contents).

The content server 201 which has received a content request from the terminal 102 recognizes the content request as being directed to the specific URL. The content server 201 then generates a content including a location measurement stop request "?gps_end" (step 2108), and transmits the created content to the terminal 102 (step 2109).

The base station signal reception section 607 thus receives the content from the content server 201. Then, the recognition section 612 refers the received content and recognizes that the location measurement stop request "?gps_end" is included (step 2110). Upon recognition of the location measurement stop request, the timer 801 is stopped (Step 705). Subsequent processings are the same as those in the third embodiment, and therefore, descriptions thereof will be omitted.

Although A-GPS location measurement or OTDOA location measurement is used as the location measurement method, any other method may be adopted in the present embodiment.

Also in the present embodiment, if a content including the location measurement stop request "?gps_end" is received, the timer 801 is stopped. However, the timer 801 may be stopped when the connection established with the content server 210 is disconnected. Alternatively, the timer 801 may be stopped after the location measurement processing is executed a predetermined number of times or when predefined time elapses.

Likewise, in embodiments 6, 8, 9 and 10 described later, the timer 801 may be stopped when the connection established with the content server 201 is disconnected. Alternatively, the timer 801 may be stopped after the location measurement processing is executed a predetermined number of times or when predefined time elapses.

### [Embodiment 5]

Next, a fifth embodiment of the present invention will be described.

The first to fourth embodiments of the present invention have been described with reference to configuration in which a location measurement processing is started when a link to a specific URL is clicked. The present embodiment will be described with reference to configuration in which the location measurement processing is started when a specific application program is started. An example of the specific application program is a Web browser. Also in this embodiment, FIG. 6 is referred to as a block diagram depicting the terminal 102 like in the first embodiment.

The recognition section 612 in the present embodiment serves to recognize that the specific application program has been started.

Next, operation in the present embodiment will be described.

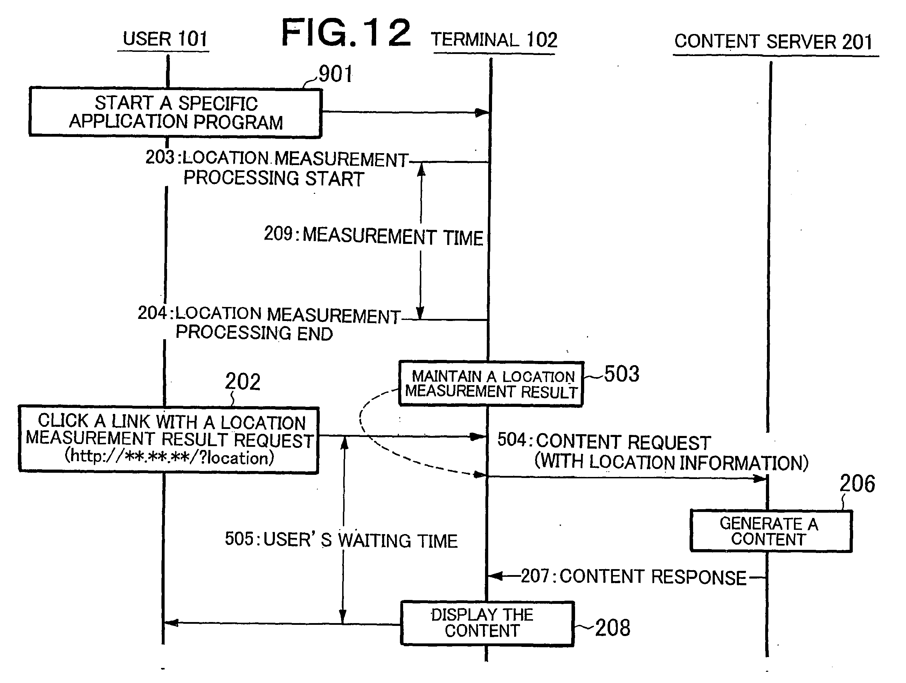

FIG. 12 is a sequence according to the present embodiment.

The user 101 starts the specific application program (step 901). Then, the recognition section 612 recognizes that the specific application program has been started, and the measurement control section 603 starts a location measurement processing (step 203). Upon completion of the location measurement processing (step 204), the operation control section 609 stores a location measurement result thereof into a memory 610 (step 503). When a link with a location measurement result request is clicked by the user (step 202), the operation control section 609 gets the location measurement result stored in the memory 610, and transmits a content request with location based information (step 504). Subsequent processing steps are the same as those in the first embodiment, and descriptions thereof will be omitted.

Although A-GPS location measurement or OTDOA location measurement is used as the location measurement method, any other method may be adopted in the present embodiment. According to the present embodiment, waiting time which users feel can be reduced like in the first embodiment.

### [Embodiment 6]

Next, a sixth embodiment of the present embodiment will be described.

The fifth embodiment has configuration described as follows. That is, the location measurement processing is started when a specific application program is started, and the location measurement result thereof is maintained on completion of the location measurement processing. When a link with a location measurement result request is clicked, the maintained location measurement result is used. However, time elapses from a time point when the specific application program is started to another time point when the link with a location measurement result request is clicked. If the terminal moves in this time period, the maintained location measurement result becomes inaccurate. Hence, as a method of solving this disadvantage, the present embodiment describes configuration in which the location measurement result is updated at constant time intervals. FIG. 9 is referred to as a block diagram depicting the terminal 102 in the present embodiment.

The recognition section 612 in the present embodiment serves to recognize that the specific application program has been started.

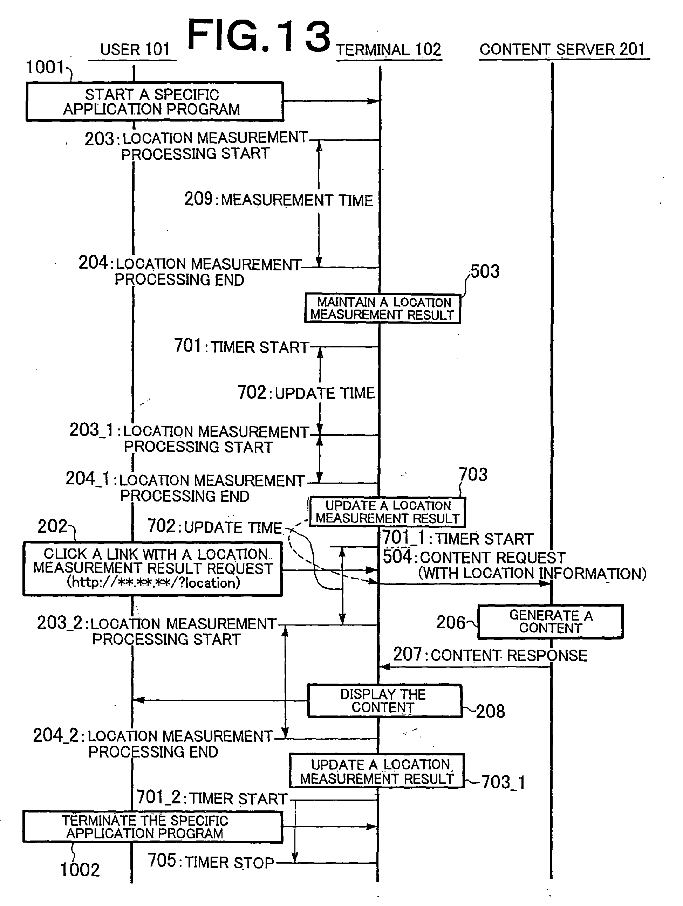

FIG. 13 is a chart showing a sequence according to the present embodiment.

The user 101 starts the specific application program (step 1001). Then, the recognition section 612 recognizes that the specific application program has been started, and the measurement control section 603 starts a location measurement processing (step 203). Upon completion of the location measurement processing (step 204), the location measurement result thereof is stored into the memory 610 (step 503). The processings up to this step are the same as those in the first embodiment, and detailed descriptions thereof will be omitted. The terminal 102 stores the location measurement result into the memory 610. Then, the operation control section 609 starts the timer 801 (step 701). Thereafter, the location measurement processing is started again when update time 702 elapses (step 203_1). Upon completion of this location measurement processing (step 204_1), the location measurement result stored in the memory 610 is updated (step 703). After the terminal 102 completes update of the location measurement result, the operation control section 609 resets the timer 801 and starts the timer 801 again (701_1).

The user 101 clicks a link with a location measurement result request (step 202). Then, the terminal 102 gets the location measurement request stored in the memory 610, and transmits a content request with location based information to the content server 201 (step 504). The link with a location measurement result request is described as "http://**.**.**/?location" like in the first embodiment. The content server 201 which has received the content request from the terminal 102 generates a content (step 206), and transmits the generated content to the terminal 102 (step 207). The terminal 102 which has received a content response displays the content (step 208). When the update time 702 elapses from the time point when the timer 801 was started in step 701_1, the location measurement processing is started again (step 203_2). Upon completion of the location measurement processing (step 204_2), the location measurement result is updated (step 703_1). Processings from step 503 to this step are the same as those in the third embodiment, and therefore, descriptions thereof will be omitted.

If the user 101 terminates the specific application program (step 1002), the terminal 102 stops the timer 801 (step 705).

Although A-GPS location measurement or OTDOA location measurement is used as the location measurement method, any other method may be adopted in the present embodiment. According to the present embodiment, waiting time which users feel can be reduced like in the third embodiment. Besides, an updated location measurement result can be obtained even if the terminal moves.

### [Embodiment 7]

The first to fourth embodiments have been described with reference to a case of starting a location measurement processing when a specific URL is accessed. The fifth and sixth embodiments have been described with reference to another case of starting a location measurement processing when a specific application program is started.

The present embodiment will be described with reference to a method of starting a location measurement processing when the user 101 makes a specific operation on the terminal 102, e.g., when the user 101 presses down a specific button. An example of the specific button can be a button to call a Web browser, a power supply button, or the like.

Like in the first embodiment, FIG. 6 is referred to as a block diagram depicting the terminal 102 in the present embodiment.

The user interface 1101 notifies the operation control section 609 of what operation the user 101 has made.

The operation control section 609 controls the terminal 102, referring to the contents of the operation of the user 101 notified by the user interface 1101.

The recognition section 612 recognizes that a specific button has been pressed down.

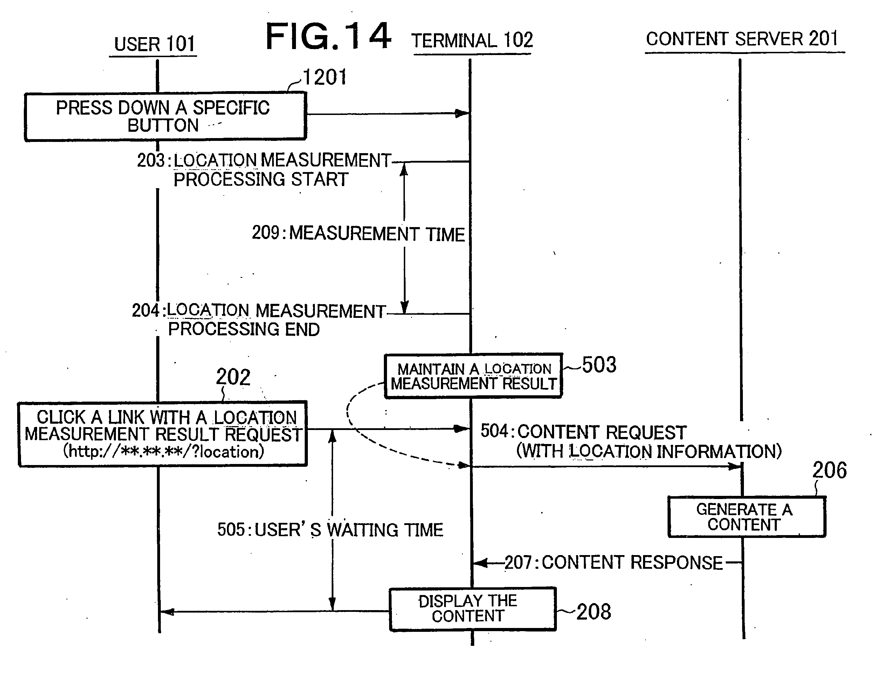

FIG. 14 is a chart showing a sequence according to the present embodiment. For convenience of description, the specific operation of the user is described as "pressing-down of a specific button". However, the specific operation of the user is not particularly limited to "pressing-down of a specific button".

The user 101 presses down the specific button (step 1201). Then, the recognition section 612 recognizes that the specific button has been pressed down, and the measurement control section 603 starts a location measurement processing (step 203). When the measurement control section 603 completes the location measurement processing (step 204), the operation control section 609 stores the location measurement result into the memory 610 (step 503). The user 101 clicks a link with a location measurement result request (step 202). Then, the operation control section 609 gets a location measurement result stored in the memory 610, and the base station signal transmission section 606 transmits a content request with location based information (step 504). The link with the location measurement result request is described as "http://**.**.**/?location" like in the first embodiment. Subsequent processings are the same as those in the first embodiment, and descriptions thereof will be omitted herefrom.

Although A-GPS location measurement or OTDOA location measurement is used as the location measurement method, any other method may be adopted in the present embodiment. According to the present embodiment, waiting time which users feel can be reduced like in the first embodiment.

### [Embodiment 8]

Next, an eighth embodiment of the present invention will be described.

The seventh embodiment is configured as follows. That is, a location measurement processing is started when a specific button is pressed down by the user 101. Upon completion of the location measurement, the location measurement result thereof is maintained. When a link with a location measurement result request is clicked, the maintained location measurement result is used. However, time elapses from the time point when the specific button is pressed down until the link with a location measurement result request is clicked. If the terminal moves in this time period, the maintained measurement result becomes inaccurate. Hence, the present embodiment will be described with reference to a method of updating the location measurement result at constant time intervals. FIG. 9 is referred to as a block diagram depicting the terminal 102.

The user interface 1101 notifies the operation control section 609 of what operation the user 101 has made.

The operation control section 609 controls the terminal 102, referring to the contents of the operation of the user 101 notified by the user interface 1101.

The recognition section 612 recognizes that a specific button has been pressed down.

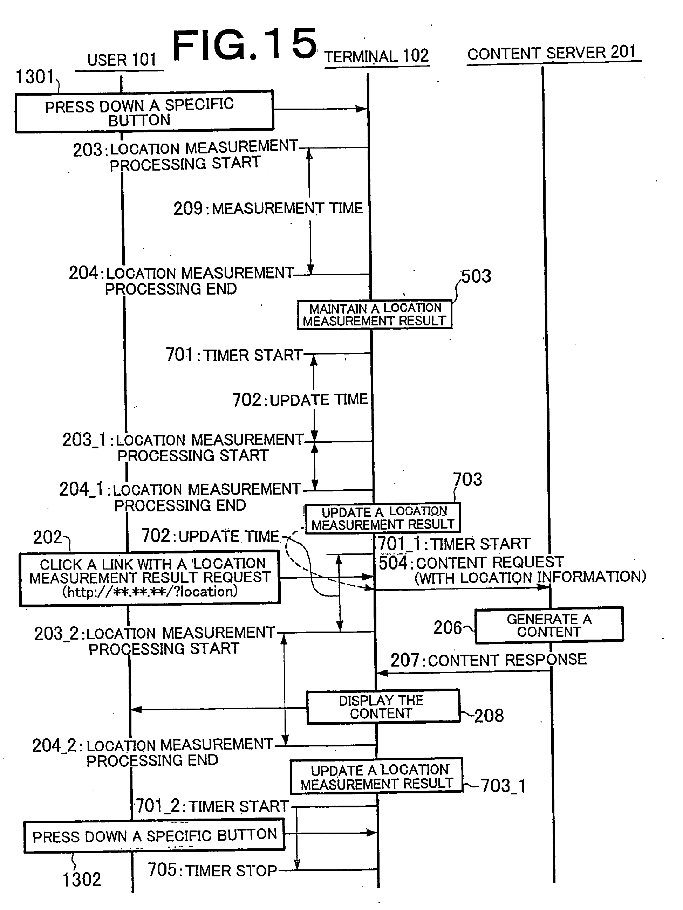

FIG. 15 is a chart showing a sequence according to the eighth embodiment of the present invention. For the sake of description, the specific operation of the user is described as "pressing-down of a specific button". However, the specific operation of the user is not particularly limited to "pressing-down of a specific button".

The user 101 presses down a first specific button (step 1301). Then, the recognition section 612 recognizes that the specific button has been pressed down, and the measurement control section 603 starts a location measurement processing (step 203). When the measurement control section 603 completes the location measurement processing (step 204), the operation control section 609 stores the location measurement result into the memory 610 (step 503). The location measurement result is thus maintained, and then, the timer 801 is started (step 701). Upon completion of update time 702, the location measurement processing is started again (step 203_1). Upon completion of the location measurement processing (step 204_1), the location measurement result is updated (step 703), and the timer 801 is started again (step 701_1) .

If a link with a location measurement result request is clicked by the user 101 (step 202), the operation control section 609 gets the location measurement result stored in the memory 610, and the base station signal transmission section 608 transmits a content request with location based information to the content server 201 (step 504). The link with the location measurement result request is described as "http://**.**.**/?location" like in the first embodiment.

The content server 201 which has received the content request from the terminal 102 generates a content (step 206), and transmits the generated content to the terminal 102 (step 207) .

The terminal 102 which has received a content response displays the content (step 208). Upon elapse of the update time 702 from the time point when the timer 801 was started in step 701_1, the location measurement processing is started again (step 203_2). Upon completion of the location measurement processing (step 204_2), the location measurement result is updated (step 703_1). Processings from step 503 to this step are the same as those in the third embodiment, and therefore, detailed descriptions thereof will be omitted.

If a second specific button is pressed down by the user 101 (step 1002), the terminal 102 stops the timer 801 (step 705) .

Although A-GPS location measurement or OTDOA location measurement is used as the location measurement method, any other method may be adopted in the present embodiment. Any other method may be adopted in the present embodiment. According to the present embodiment, waiting time which users feel can be reduced like in the third embodiment. Besides, an updated location measurement result can be obtained even if the terminal moves.

### [Embodiment 9]

Next, a ninth embodiment of the present invention will be described.

The first to fourth embodiments have been described with reference to a case of starting a location measurement processing when a specific URL is accessed. The fifth and sixth embodiments have been described with reference to another case of starting a location measurement processing when a specific application program is started. Further, the seventh and eighth embodiments have been described with reference to yet another case of starting a location measurement processing when a specific operation is made on the terminal 102 by the user 101, e.g., when a specific button is pressed down. The present embodiment will be described with reference to a method of starting a location measurement processing in response to a change of communication environment of the terminal 102. An example of the change of communication environment can be a change from an incommunicable range to a communicable range.

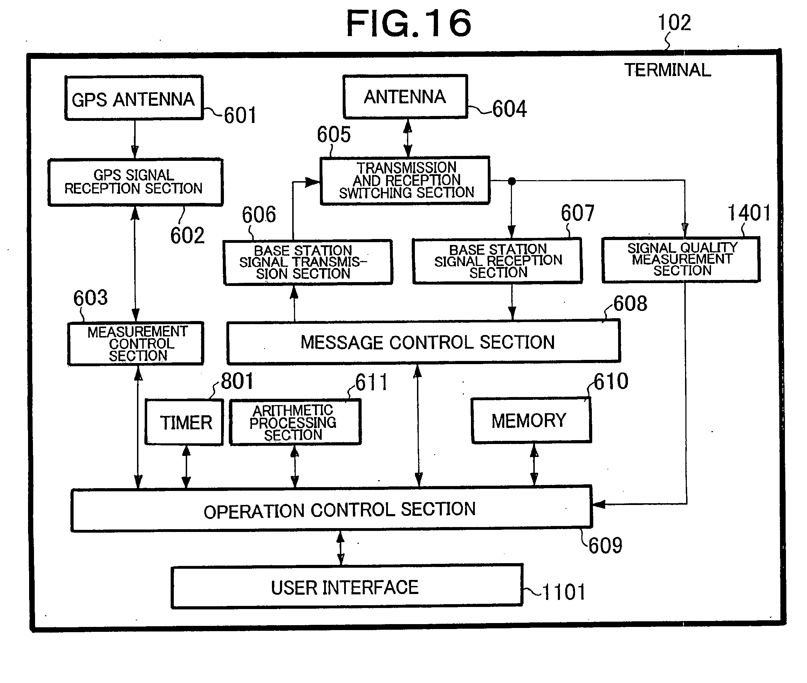

FIG. 16 is a diagram showing schematic configuration of a terminal 102 in the present embodiment. In FIG. 16, the same componential members as those in FIG. 9 are denoted by the same numerals, and detailed descriptions thereof will be omitted. The terminal 102 shown in FIG. 16 differs from that in FIG. 9 in that the recognition section 612 is not provided but a signal quality measurement section 1401 is provided.

The signal quality measurement section 1401 measures quality of a received signal and notifies the operation control section 609 of a measurement result.

The operation control section 609 controls operation of the terminal 102, referring to quality of a received signal which is notified by the signal quality measurement section 1401.

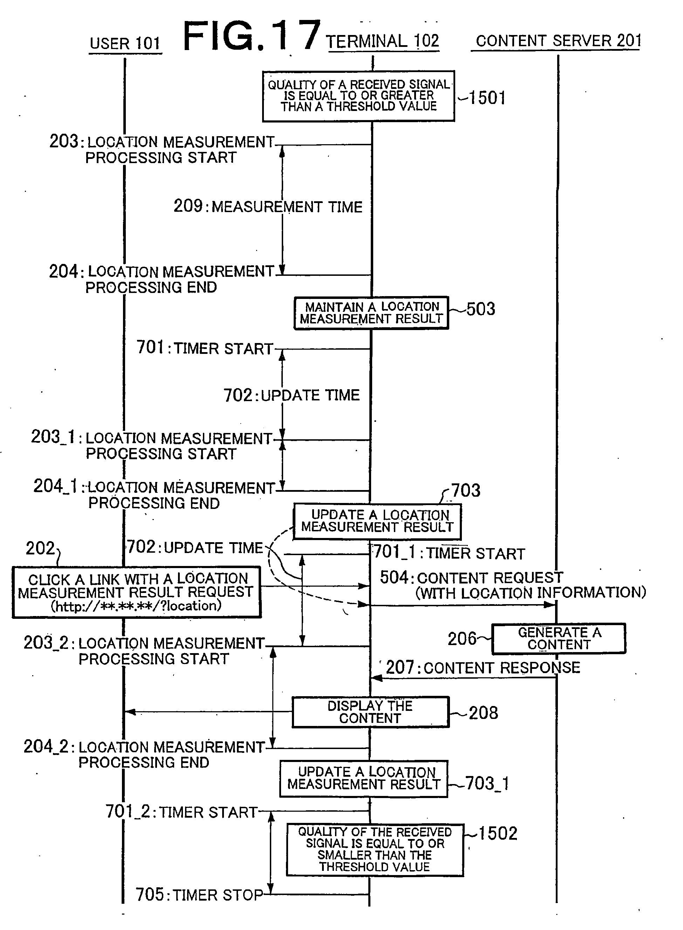

FIG. 17 is a chart showing a sequence according to the present embodiment.

When the quality of a base station signal measured by the signal quality measurement section 1401 of the terminal 102 reaches a threshold value or higher (step 1501), the measurement control section 603 starts a location measurement processing (step 203). The measurement control section 603 completes the location measurement processing (step 204). Then, the operation control section 609 stores the location measurement result into the memory 610 (step 503). The location measurement result is thus maintained, and then, the timer 801 is started (step 701). When update time 702 elapses, the location measurement processing is started again (step 203_1). Upon completion of the location measurement processing (step 204_1), the location measurement result is updated (step 703), and the timer 801 is started again (step 701_1).

If a link with a location measurement result request is clicked by the user 101 (step 202), the operation control section 610 gets the location measurement result stored in the memory 610, and the base station signal transmission section 606 transmits a content request with location based information to the content server 201 (step 504). The link with the location measurement result request is described as "http://**.**.**/?location" like in the first embodiment.

The content server 201 which has received the content request from the terminal 102 generates a content (step 206), and transmits the generated content to the terminal 102 (step 207).

Upon reception of the content response, the terminal 102 displays a received content (step 208). Processings subsequent to step 503 are the same as those in the third embodiment, and therefore, detailed descriptions thereof will be omitted.

When the quality of the base station signal measured by the signal quality measurement section 1401 of the terminal 102 decreases to the threshold value or lower (step 1502), the terminal 102 stops the timer 801 (step 705).

Although A-GPS location measurement or OTDOA location measurement is used as the location measurement method, any other method may be adopted in the present invention. According to the present embodiment, waiting time which users feel can be reduced like in the first embodiment.

### [Embodiment 10]

Next, a tenth embodiment of the present invention will be described.

The ninth embodiment has been described with reference to a case of controlling a location measurement processing depending on whether quality of reception of a base station signal received by the terminal 102 exceeds a threshold value or not. The tenth embodiment will be described with reference to another case of controlling a location measurement processing depending on whether quality of reception of a GPS signal received by the terminal 102 exceeds a threshold value or not. FIG. 16 is referred to as a block diagram depicting the terminal 102.

The sequence according to the present embodiment is the same as FIG. 17 showing the sequence of the ninth embodiment. In the present embodiment, only those steps that differ from those of the ninth embodiment will be described.

In step 1501, the terminal 102 starts a location measurement processing if quality of reception of a GPS signal is a threshold value or higher (step 203). In another step 1502, if the quality of reception of the GPS signal is the threshold value or lower, the terminal 102 stops the timer 801 (step 705), and discards the location measurement result which has been stored in the memory 610.

Although A-GPS location measurement or OTDOA location measurement is used as the location measurement method, any other method may be adopted in the present embodiment. Like in the first embodiment, waiting time which users feel can be reduced according to the present embodiment.

### [Embodiment 11]

Next, an eleventh embodiment of the present invention will be described.

The first to tenth embodiments have been described with reference to a method as follows. That is, a location measurement processing is executed in advance before a user clicks a link which requires location based information. The location measurement result thereof is maintained. If the user clicks a link which requires location based information, the maintained location measurement result is used. Thus, user's waiting time is reduced. The present embodiment will be described with reference to another case that the terminal can use two location measurement methods, one being a location measurement method with short location measurement time and low location measurement accuracy, and the other being a location measurement method with long location measurement time and high location measurement accuracy. In this case, location measurement is first carried out according to the former location measurement method with short location measurement time and low location measurement accuracy, when a link which requires location based information is clicked by the user. A service is started with use of a result thereof. In parallel with start of the service, location measurement is carried out according to the latter location measurement method with long location measurement time and high location measurement accuracy.

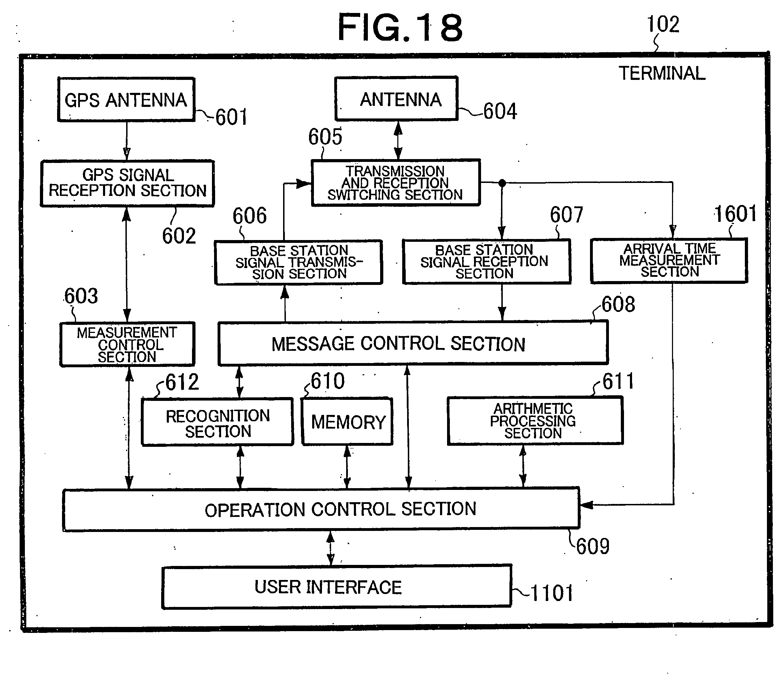

FIG. 18 is a diagram showing schematic configuration of a terminal 102 in the present embodiment. In FIG. 18, the same componential members as those in FIG. 6 are denoted by the same numerals, and detailed descriptions thereof will be omitted. The terminal 102 shown in FIG. 18 differs from the configuration shown in FIG. 6 in that an arrival time difference measurement section 1601 is provided.

The arrival time difference measurement section 1601 supports OTDOA location measurement as a location measurement method with short location measurement time. As has been described previously, the OTDOA location measurement obtains two hyperbolic curves from differences among arrival times of signals from three base stations. An intersection between the hyperbolic curves is taken as the position of a terminal.

The arithmetic processing section 611 is capable of performing an arithmetic processing of the OTDOA location measurement in addition to an arithmetic processing of A-GPS location measurement.

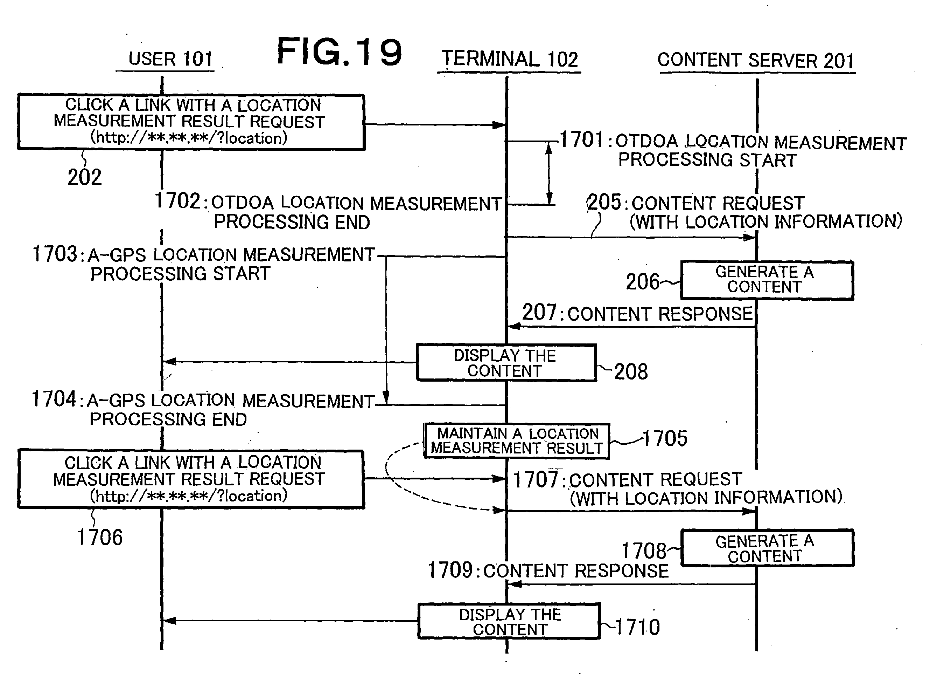

FIG. 19 is a chart showing a sequence according to the present embodiment.

When a link with a location measurement result request is clicked by the user 101 (step 202), the terminal 102 starts a processing according to the OTDOA location measurement with short location measurement time (step 1701). The link with a location measurement result request is described as "http://**.**.**/?location" like in the first embodiment. Upon completion of the OTDOA location measurement processing (step 1702), a content request added with a location measurement result is transmitted to the content server 201 (step 205). At the same time, the terminal 102 starts a processing according to the A-GPS location measurement (step 1703).

The content server 201 which has received the content request generates a content, referring to location based information added to the request (step 206), and transmits the generated content to the terminal 102 (step 207).

The terminal 102 which has received a content response displays the content (step 208). When the A-GPS location measurement started in step 1703 is completed (step 1704), the terminal 102 then maintains the location measurement result into the memory 610 (step 1705). If a link with a location measurement result request is clicked by the user 101 (step 1706), the terminal 102 refers to the location measurement result maintained in the memory 610, and transmits a content request with location based information to the content server 201 (step 1707).

The content server 201 that has received the content request generates a content, referring to the location based information added to the content request (step 1708), and transmits the generated content to the terminal 102 (step 1709). The terminal 102 that has received a content response displays the content (step 1710).

In the present embodiment described above, if a link with a location measurement result request is clicked by the user 101 (step 1706), the terminal 102 refers to the location measurement result maintained in the memory 610, and transmits a content request with location based information to the content server 201 (step 1707). However, configuration may be as follows. In step 208, a display method of a content in case where a location measurement result of A-GPS location measurement is obtained by the terminal 102 is added to the content to be transmitted by the content server 201 , and the content is transmitted by the terminal 102. The display method is maintained in the memory 610. In this case, processings from step 1707 to 1709 are not executed. If a link with a location measurement request is clicked by the user 101 (step 1706), the terminal 102 refers to the method of displaying a content, which has been stored in the memory 610, and to information concerning the position of the terminal 102 itself, and displays again the content (step 1710).

### [Embodiment 12]

Next, a twelfth embodiment of the present invention will be described.

The eleventh embodiment has been described with reference to a case that the location measurement result of the A-GPS location measurement stored in the memory 610 is referred to when a link with a location measurement result request is clicked by the user 101. The present embodiment will be described with reference to a method of transmitting a content request upon completion of A-GPS location measurement, without a request from the user 101. FIG. 18 is also referred to as a block diagram depicting the terminal 102.

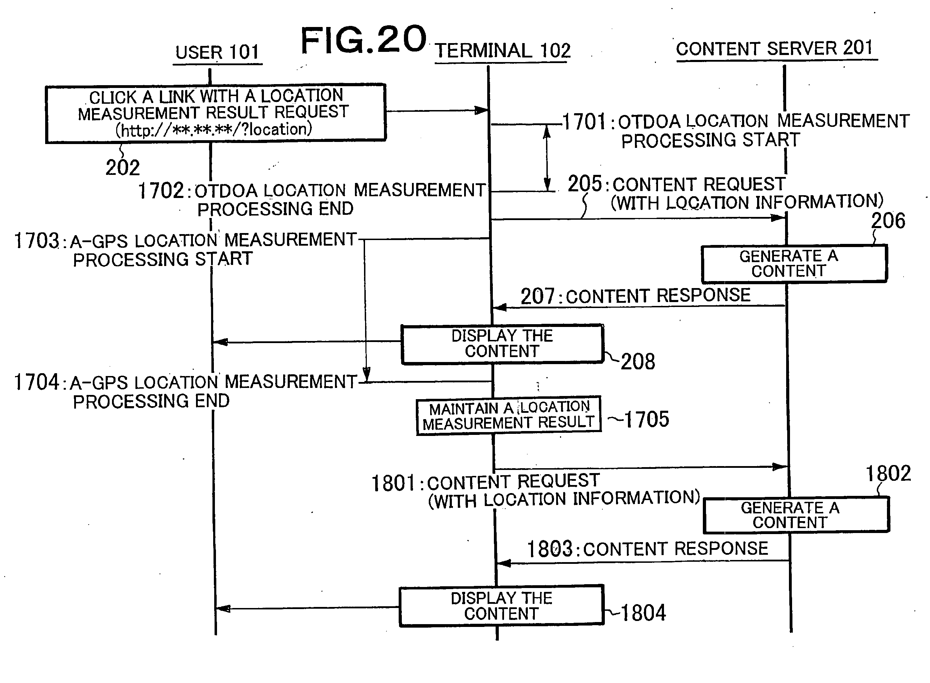

FIG. 20 is a chart showing a sequence according to the present embodiment.

Steps from completion of A-GPS location measurement to storage of a location measurement result into the memory 610 are the same as those in the eleventh embodiment, and descriptions thereof will be omitted.

After a location measurement result is stored into the memory 610, a content request with location based information is transmitted again to the content server 201 (step 1801). At this time, the added location based information indicates the position of the terminal 102 specified by the A-GPS location measurement. The content server 201 that has received the content request from the terminal 102 generates a content (step 1802), and transmits the generated content to the terminal 102 (step 1803).

The terminal 102 that has received a content response from the content server displays a received content (step 1804).

In the embodiment described above, the terminal 102 sores a location measurement result into the memory 610, and thereafter, transmits a content request with location based information to the content server 201 (step 1801). The terminal 102 displays the content transmitted in response to the content request (step 1804). However, like the eleventh embodiment, configuration may be arranged as follows. In step 208, a display method of a content in case where a location measurement result of A-GPS location measurement is obtained by the terminal 102 is added to the content to be transmitted by the content server 201, and the content is transmitted by the terminal 102. The display method is maintained in the memory 610. In this case, processings from steps 1801 to 1803 are not executed. Upon completion of A-GPS location measurement, the terminal 102 refers to the display method of the content, which has been stored in the memory 610, and displays again the content (step 1804).

### [Embodiment 13]

Next, a thirteenth embodiment of the present invention will be described.

In the eleventh and twelfth embodiments, if a link with a location measurement result request is clicked by the user 101, the position of the terminal 102 is specified first by OTDOA location measurement with low measurement time, and a content request with the specified position of the terminal 102 is transmitted to the content server 201. In parallel with this, A-GPS location measurement with long measurement time is started. Upon completion of the A-GPS location measurement, the specified position is stored into the memory 610. If a link with a location measurement result request is clicked by the user 101 after completion of the A-GPS location measurement, the terminal 102 gets its own position from the memory 610, and transmits a content request with the obtained location based information, to the content server 201.

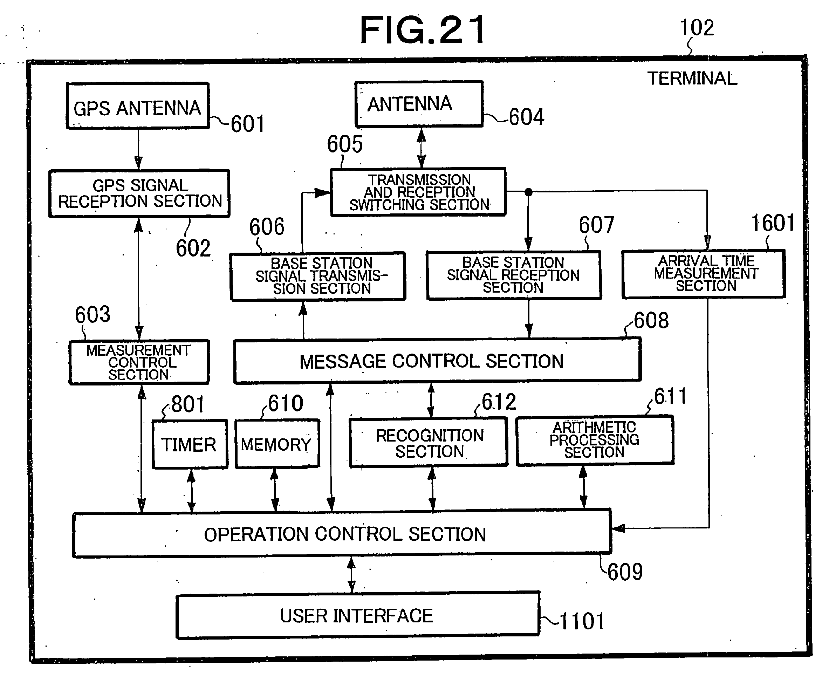

However, if time which elapses from the time point when the link with a location measurement result request was clicked first by the user 101 to the time point when the link with a location measurement result request is clicked next is long, the terminal 102 may move and the information concerning the position of the terminal 102 stored in the memory 610 may then become incorrect. To solve this disadvantage, the present embodiment will be described with reference to a method of periodically performing A-GPS location measurement after completion of OTDOA location measurement. FIG. 21 is referred to as a block diagram depicting the terminal 102. In FIG. 21, the same componential members as those in FIG. 18 are denoted by the same numerals, and detailed descriptions thereof will be omitted. The terminal 102 shown in FIG. 21 differs from the configuration in FIG. 18 in that the timer 801 is provided.

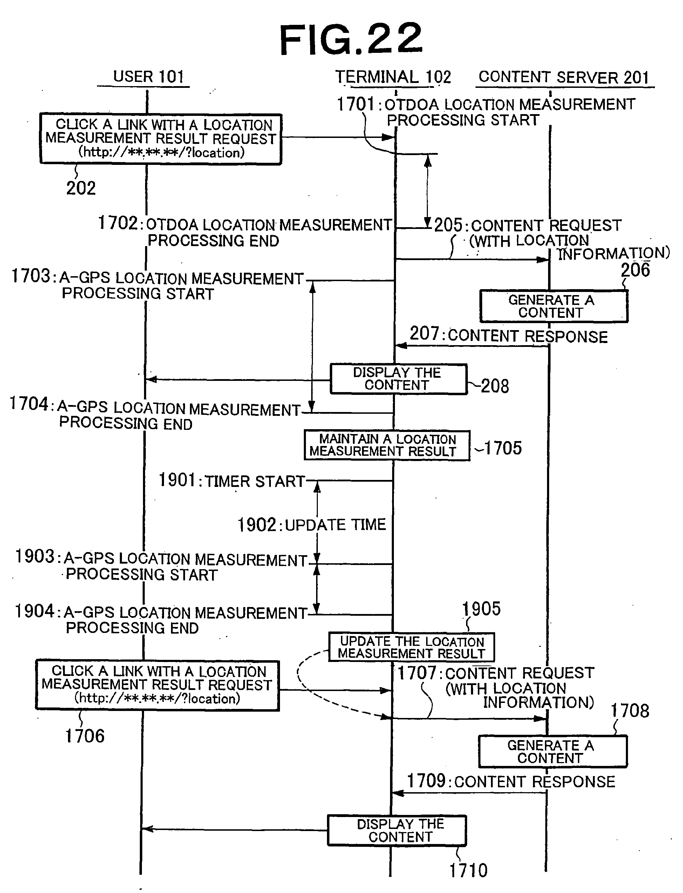

FIG. 22 is a chart showing a sequence according to the present embodiment.

The sequence after completion of A-GPS location measurement up to step 1705 of storing a location measurement result into the memory 610 is the same as that in the eleventh embodiment, and detailed descriptions thereof will be omitted.

The terminal 102 which has stored the location measurement result into the memory 610 starts the timer 801 (step 1901). When update time 1902 elapses, A-GPS location measurement is started again (step 1903). Upon completion of the A-GPS location measurement (step 1904), the location measurement result thereof is stored into the memory 610, and information concerning the position of the terminal 102 itself which the terminal 102 maintains is updated.

Subsequent processings are the same as those in the eleventh embodiment, and therefore, detailed descriptions thereof will be omitted.

In the present embodiment, if a link with a location measurement request is clicked by the user 101 (step 1706), the terminal 102 refers to the location measurement result maintained in the memory 610; and transmits a content request with location based information, to the content server 201 (step 1707), like in the eleventh embodiment. However, there can be another method as follows. That is, in step 208, a display method of a content in case where a location measurement result of A-GPS location measurement is obtained is added to the content response to be transmitted to the terminal 102 by the content server 201. The display method is maintained in the memory 610. In this case, processings from step 1707 to 1709 are not executed. If a link with a location measurement request is clicked by the user 101 (step 1706), the terminal 102 refers to the method of displaying a content, which has been stored in the memory 610, and to information concerning the position of the terminal 102 itself, and displays again the content (step 1710).

### [Embodiment 14]

Next, a fourteenth embodiment of the present invention will be described.

The eleventh to thirteenth embodiments have been described above with reference to a case where the user 101 clicks a link to a specific URL. However, the configuration may be arranged such that a location measurement request or location measurement stop request included in a content received from the content server 201 is recognized and processed, like in the second to fourth embodiments. In this case, processings are the same as those in the embodiments described above, and detailed descriptions thereof will be omitted.

In the eleventh embodiment to the present embodiment, OTDOA location measurement is cited as an example of a location measurement method with short location measurement time and low location measurement accuracy, and A-GPS location measurement is cited as an example of another location measurement method with long location measurement time and high location measurement accuracy. Location measurement methods are not limited to these two methods.

### [Embodiment 15]

Next, a fifteenth embodiment of the present invention will be described.

The eleventh to fourteenth embodiments have been described with reference to a case where the user 101 clicks a link which requires location based information. However, even in another case where the user 101 starts up a specific application program, similar advantages can be attained. Hence, the present embodiment will be described to the latter case where the user 101 starts up a specific application program.

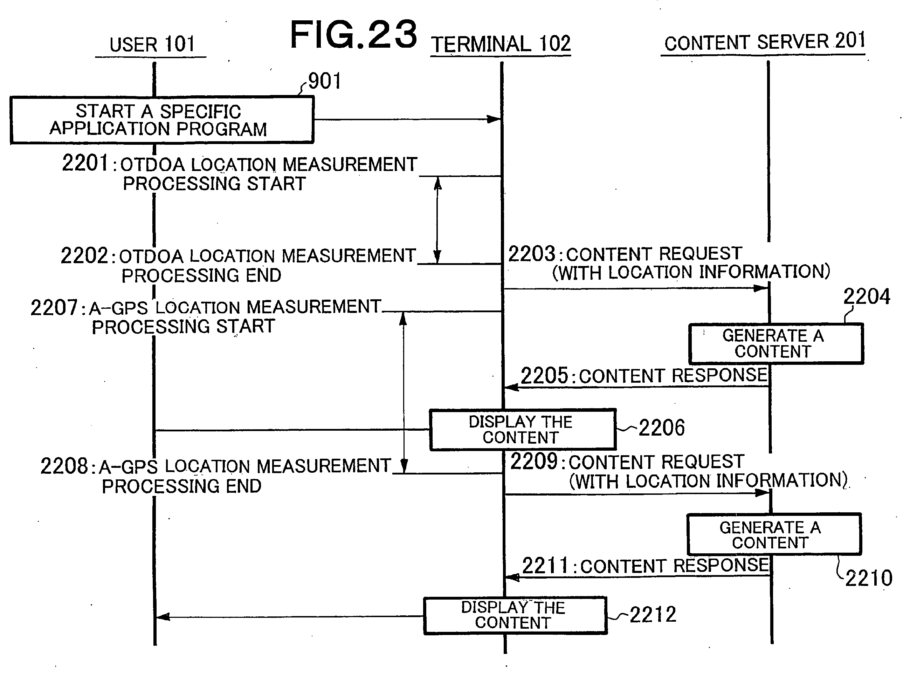

FIG. 23 is a chart showing a sequence where the user 101 starts up a specific application program. FIG. 18 is referred to as a block diagram depicting the terminal 102.

The user 101 starts up a specific application program (step 901). Then, the terminal 102 starts an OTDOA location measurement processing (step 2201).

Upon completion of the OTDOA location measurement processing (step 2202), the terminal 102 transmits a content request with information indicative of the position of itself to the content server 201 (step 2203). At the same time, the terminal 102 starts an A-GPS location measurement processing (step 2207).

The content server 201 which has received the content request from the terminal 102 generates the requested content, referring to the location based information added to the content request (step 2204), and transmits the generated content to the terminal 102 (step 2205). The terminal 102 which has received a content response form the content server 201 displays the received content for the user 101 (step 2206).

Upon completion of the A-GPS location measurement processing (step 2208), the terminal 102 transmits a content request with information indicative of the position of itself to the content server 201 (step 2209). The content server 201 which has received the content request from the terminal 102 generates again the requested content, referring to the location based information added to the content request (step 2210), and transmits the generated content to the terminal 102 (step 2211). The terminal 102 which has received a content response from the content server 201 displays again the received content for the user 101 (step 2212).

In the present embodiment, upon completion of the A-GPS location measurement processing (step 2208), the terminal 102 transmits a content request added with information indicative of the position of itself to the content server 201 (step 2209). The content server 201 which has received the content request from the terminal 102 generates again a requested content, referring to the location based information added to the content request (step 2210), and transmits the generated content to the terminal 102 (step 2211). However, there can be another method as follows. That is, in step 2205, a display method of a content in case where a location measurement result of A-GPS location measurement is obtained is added to the content response to be transmitted to the terminal 102 by the content server 201. The display method is maintained in the memory 610. In this case, processings from step 2209 to 2210 are not executed. Upon completion of the A-GPS location measurement (step 2208), the terminal 102 displays again a content, referring to the display method of a content maintained in the memory 610 and to information concerning the position of itself (step 2212).

### [Embodiment 16]

Next, a sixteenth embodiment of the present invention will be described.

The fifteenth embodiment has been described with reference to configuration in which upon completion of an A-GPS location measurement processing, the terminal 102 transmits a content request with information indicative of the position of itself to the content server 201 (steps 2208 to 2209). The present embodiment will be described with reference to configuration in which the terminal 102 maintains a result of an A-GPS location measurement processing, and executes steps 2208 to 2212 in response to a request from the user 101 or an application program which the user 101 started up in step 901. FIG. 18 is referred to as a block diagram depicting the terminal 102.

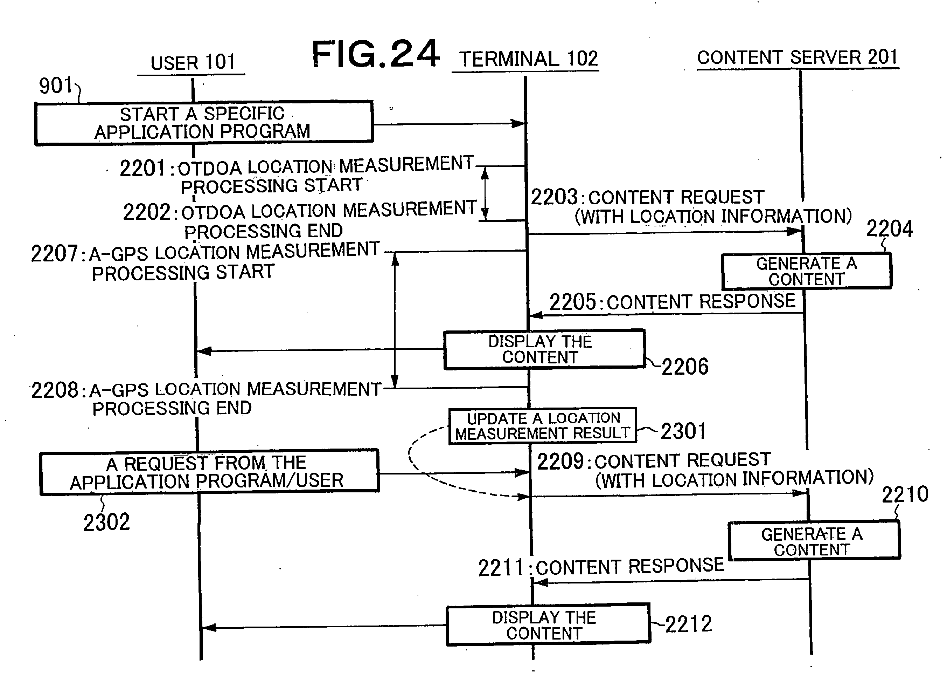

FIG. 24 is a chart showing a sequence according to the present embodiment.

Processings in steps 901 to 2207 are the same as those in the fifteenth embodiment, and descriptions thereof will be omitted.

Upon completion of an A-GPS location measurement processing (step 2208), the terminal 102 maintains the location measurement result in the memory 610 (step 2301).

If an application program started up in step 901 or the user 101 issues a request which requires detailed position (step 2302), the terminal 102 gets information concerning the position of itself from the memory 610, and transmits a content request with the got information concerning the position to the content server 201 (step 2209).

Subsequent processings are the same as those in the fifteenth embodiment, and therefore, descriptions thereof will be omitted.

In the present embodiment, if an application program started up in step 901 or the user 101 issues a request which requires detailed position (step 2302), the terminal 102 transmits a content request added with information indicative of the position of itself to the content server 201 (step 2209). The content server 201 which has received the content request from the terminal 102 generates again a requested content, referring to the location based information added to the content request (step 2210), and transmits the generated content to the terminal 102 (step 2211). However, there can be another method as follows. That is, in step 2205, a display method of a content in case where a location measurement result of A-GPS location measurement is obtained is added to the content response to be transmitted to the terminal 102 by the content server 201. The display method is maintained in the memory 610. In this case, processings from step 2209 to 2211 are not executed. Upon completion of the A-GPS location measurement (step 2208), the terminal 102 displays again a content, referring to the display method of a content maintained in the memory 610 and to information concerning the position of itself (step 2212).

### [Embodiment 17]

Next, a seventeenth embodiment of the present invention will be described.

The sixteenth embodiment has been described with reference to configuration as follows. That is, the terminal 102 maintains a location measurement result of A-GPS location measurement into the memory 610. When a started application program or the user 101 issues a request which requires detailed position, the information concerning the position of itself maintained in the memory 610 is used to transmit a content request to the content server 201. The present embodiment will be described with reference to configuration in which the timer 801 is started up upon completion of a first A-GPS location measurement processing and A-GPS location measurement is carried out periodically, to update information concerning the position of itself maintained in the memory 610. FIG. 21 is referred to as a block diagram depicting the terminal 102.

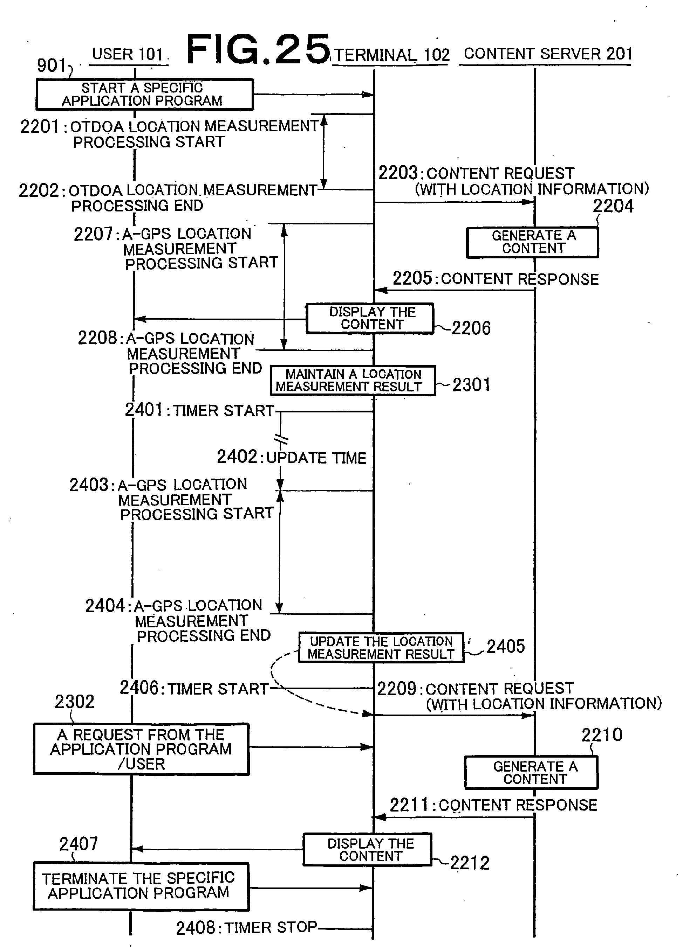

FIG. 25 is a chart showing a sequence according to the present embodiment. Processings of steps 901 to 2301 are the same as those in the fifteenth embodiment, and therefore, descriptions thereof will be omitted.

The terminal 102 which has completed an A-GPS location measurement processing and stored the location measurement result thereof into the memory 610 starts up the timer 801 and starts measuring elapsed time (step 2401). Thereafter, the A-GPS location measurement processing is started again upon elapse of predetermined update time 2402 (step 2403). Upon completion of the A-GPS location measurement processing (step 2404), the location measurement result maintained in the memory 610 is discarded and a new location measurement result is stored in the memory 610 (step 2405). Thereafter, the timer 801 is started again.

Processings of steps 2302 to 2212 are the same as those in the fifteenth embodiment, and therefore, descriptions thereof will be omitted.

If a specific application program is stopped by the user 101 (step 2407), the terminal 102 stops the timer 801 (step 2408). Alternatively, the timer 801 may be stopped when the connection established with the content server 201 is disconnected. Also alternatively, the timer 801 may be stopped when the location measurement processing is carried out a predefined number of times or predefined time elapses.

The present embodiment is configured as follows. If a application program started in step 901 or the user 101 issues a request (step 2302), the terminal 102 transmits a content request with information indicative of the position of itself to the content server 201 (step 2209). The content server 201 which has received the content request from the terminal 102 generates again a requested content, referring to location based information added to the content request (step 2210), and transmits the generated content to the terminal 102 (step 2211). However, there can be another method as follows. That is, in step 2205, a display method of a content in case where a location measurement result of A-GPS location measurement is obtained is added to the content response to be transmitted to the terminal 102 by the content server 201. The display method is maintained in the memory 610. In this case, processings from step 2209 to 2211 are not executed. Upon completion of the A-GPS location measurement (step 2208), the terminal 102 displays again a content, referring to the display method of a content maintained in the memory 610 and to information concerning the position of itself (step 2212).

In the fifteenth to sixteenth embodiments and in the present embodiment, OTDOA location measurement is cited as an example of a location measurement method with short location measurement time and low location measurement accuracy, and A-GPS location measurement is cited as an example of another location measurement method with long location measurement time and high location measurement accuracy. Location measurement methods are not limited to these two methods. Further, the configuration may be arranged as follows. That is, a location measurement start processing or a location measurement stop processing is not limitedly executed in the case of starting and quitting a specific application program, like in the fifteenth to sixteenth embodiments and in the present embodiment, but may be executed in a case where a specific button is pressed down or where quality of a received signal increases to a threshold value or higher or decreases to the threshold value or lower.

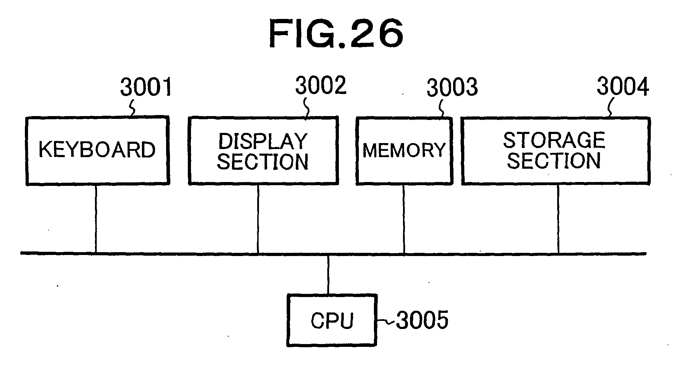

The configurations shown in FIGS. 6, 9, 16, 18, and 21 of the first to seventeenth embodiments described above may be realized as hardware configurations. However, part or all of functional sections depicted as blocks in FIGS. 6, 9, 16, 18, and 21 can be constituted as software, except antennae and GPS antennae. That is, as shown in FIG. 26, the terminal may be constituted by: an antenna 3001 as an antenna 604 and GPS antenna 3001; a display section 3002 such as a liquid crystal display or an EL display which displays arithmetic processing status and contents; a storage section 3004 such as a ROM (Read On Memory) or the like in which a program is recorded; a RAM (Random Access Memory) in which auxiliary information (assistance data) included in a received message or a location measurement result is stored; a memory 3003 such as a flash memory; and a CPU 3005 which executes the program. Functions shown in FIGS. 6, 9, 16, 18, and 21 are realized by executing the program.

The program stored in the storage section 3004 describes, for example, processing operations of the terminals 102 which are shown in FIGS. 7, 8, 10 to 15, 17, 19, 20, and 22 to 25.

### Industrial Applicability

The present invention as has been described above is applicable to whole services utilizing positions of terminals which are provided by i-mode (an information service of texts and the like via cellular phones: a registered trademark in Japan), WAP (Wireless Application Protocol), or the like.

## Claims

1. A location based information service providing-method for use in a mobile communication network system including a content server which transmits a content, and a terminal which has location measurement means to execute a location measurement processing, reception means to receive a content from the content server, and transmission means to transmit a content request which requests a content from the content server, the method comprising:
a first step in which said location measurement means executes a location measurement processing of determining a position of said terminal; and
a second step in which if a content request with a location measurement result is given, said transmission means transmits to the content server a content request with information concerning a geographical position of said terminal which is determined as a result of the location measurement processing in the first step.

2. The location based information service providing-method according to claim 1, wherein a recognition section to recognize function information issued for every operation is provided, and the location measurement processing is executed if said recognition section recognizes the function information.

3. The location based information service providing-method according to claim 2, wherein the function information is a character string including an address of a request to said content server.

4. The location based information service providing-method according to claim 2, wherein the function information is a location measurement processing request from said content server.

5. The location based information service providing-method according to claim 2, wherein the function information is a signal transmitted when an application program executable by said terminal is started up.

6. The location based information service providing-method according to claim 2, wherein the function information is a signal transmitted when a button which said terminal has is pressed down.

7. The location based information service providing-method according to claim 2, wherein if said recognition section recognizes the content request with a location measurement result, processing of the second step is executed.

8. The location based information service providing-method according to claim 1, wherein quality measurement means to measure quality of reception of a radio signal which the terminal is receiving, and the location measurement processing in the first step is executed if the quality of reception measured by said quality measurement means increases to a preset threshold value or higher.

9. The location based information service providing-method according to claim 8, wherein the radio signal is a signal which said terminal uses for communication.

10. The location based information service providing-method according to claim 8, wherein the radio signal is a signal transmitted from a GPS satellite.

11. The location based information service providing-method according to claim 1, wherein
said terminal has a memory to maintain the result of the location measurement processing; and
in the first step, said location measurement means periodically executes the location measurement processing, and information concerning a geographical position of the terminal itself determined as a result of the location measurement processing is updated and maintained in the memory for every time when the location measurement processing is executed.

12. The location based information service providing-method according to claim 1, wherein the location measurement processing is a location measurement processing using a signal from a GPS satellite.

13. A location based information service providing-method for use in a mobile communication network system including a content server which transmits a content, and a terminal which includes location measurement means to execute a first location measurement processing and a second location measurement processing having faster processing speed than the first location measurement processing, a recognition section to recognize function information issued for every operation, reception means to receive a content from the content server, and transmission means to transmit a content request requesting a content from the content server, the method comprising:
a first step in which when first function information is recognized by said recognition section, said location measurement means executes the second location measurement processing to determine a position of said terminal;
a second step in which said transmission means transmits to said content server a content request with information concerning the geographical position of said terminal determined as a result of the second location measurement processing in the first step;
a third step in which said location measurement means executes the first location measurement processing to determine the position of said terminal after the second step; and
a fourth step in which said transmission means transmits to said content server a content request with information concerning the geographical position of said terminal determined as a result of the first location measurement processing in the third step.

14. The location based information service providing-method according to claim 13, wherein the first function information is a content request with a location measurement result.

15. The location based information service providing-method according to claim 13, wherein the first function information is a location measurement processing request from said content server.

16. The location based information service providing-method according to claim 13, wherein the first function information is a signal transmitted when an application program executable by said terminal is started up.

17. The location based information service providing-method according to claim 13, wherein the first function information is a signal transmitted when a button which said terminal has is pressed down.

18. The location based information service providing-method according to claim 13, wherein the first location measurement processing in the third step is executed when second function information is recognized by said recognition section.

19. The location based information service providing-method according to claim 18, wherein the second function information is a content request with a location measurement result.

20. The location based information service providing-method according to claim 18, wherein the second function information is a signal transmitted while an application program executable by said terminal is operating.

21. The location based information service providing-method according to claim 13, wherein
said terminal has a memory to maintain the result of the first location measurement processing, and
in the third step, said location measurement means periodically executes the first location measurement processing, and the information concerning the geographical position of said terminal itself determined as the result of the first location measurement processing is updated and maintained in the memory for every time when the first location measurement processing is executed.

22. The location based information service providing-method according to claim 13, wherein the first location measurement processing is a location measurement processing of performing location measurement with use of a signal from a GPS satellite.

23. The location based information service providing-method according to claim 13, wherein the second location measurement processing is a location measurement processing of performing location measurement with use of a signal from a base station.

24. A terminal for use in a mobile communication network system including said terminal and a content server which transmits a content in response to a content request from said terminal, said terminal comprising:
a recognition section to recognize function information issued for every operation;
location measurement means to execute a location measurement processing of determining a position of said terminal if the function information is recognized by said recognition section;
means to transmit a location measurement result of the location measurement processing and a content request, if a content request with a location measurement result is issued; and
means to receive a content transmitted in response to the content request transmitted.

25. A terminal for use in a mobile communication network system including said terminal and a content server which transmits a content in response to a content request from said terminal, said terminal comprising:
location measurement means to execute a first location measurement processing and a second location measurement processing having faster processing speed than the first location measurement processing,
a recognition section to recognize function information issued for every operation;
reception means to receive a content from said content server;
transmission means to transmit to the content server a content request requesting a content;
control means to carry out a processing of making said location measurement means execute a second location measurement processing of determining a position of said terminal when first function information is recognized by said recognition section, a processing of making said transmission means transmit to said content server a content request with information concerning a geographical position of said terminal determined as a result of the second location measurement processing, a processing of making said location measurement means execute the first location measurement processing of determining the position of said terminal, and a processing of making said transmission means transmit to said content server a content request with information concerning the geographical position of said terminal determined as a result of the first location measurement processing.

26. A program recorded in a recording section of a terminal in a location based information service providing system using a mobile communication network, said program making said terminal execute:
a first processing in which a location measurement processing of determining a position of said terminal is executed when function information issued for every operation is recognized; and
a second processing in which, if a content request with a location measurement result is given, a content request with information concerning a geographical position of said terminal determined as a result of the location measurement processing is transmitted to a content server connected to said terminal via said mobile communication network.

27. A program recorded in a recording section of a terminal in a location based information service providing system using a mobile communication network, said program making said terminal execute:
a first processing in which when function information issued for every operation is recognized, a second location measurement processing of determining a position of said terminal is executed;
a second processing in which a content request with information concerning a geographical position of said terminal determined as a result of the second location measurement processing is transmitted to a content server connected to said terminal via said mobile communication network;
a third processing in which a first location measurement processing having slower processing speed than the second location measurement processing is executed; and
a fourth processing in which a content request with information concerning the geographical position of said terminal determined as a result of the first location measurement processing is transmitted to said content server.
